# EUROPEAN PATENT APPLICATION

(11) **EP 4 750 107 A1**
(43) Date of publication of application: **27.05.2026**
(21) Application number: 24853570.0
(22) Date of filing: 31.07.2024
(51) Int. Cl.: H04W 8/24, H04W 8/20, H04W 76/19

(54) **COMMUNICATION METHOD AND APPARATUS**

(30) Priority: 11.08.2023 CN 202311018748
(71) Applicant: HUAWEI TECHNOLOGIES CO., LTD., Shenzhen 518129 (CN)
(72) Inventor: SHA, Tong, Shenzhen, Guangdong 518129 (CN); LI, Bingzhao, Shenzhen, Guangdong 518129 (CN); KUANG, Yiru, Shenzhen, Guangdong 518129 (CN)
(74) Representative: Gill Jennings & Every LLP
(86) International application number: PCT/CN2024/108879
(87) International publication number: WO 2025/036158

(57) **Abstract**

A communication method and apparatus are provided. The method includes: sending first information in a capability restriction case, where the first information indicates a capability of a terminal device in a first band in a first band combination in the capability restriction case, and the capability that is in the first band in the first band combination and that is indicated by the first information is lower than a capability that is in the first band in the first band combination and that is indicated by first capability information. According to the foregoing method, the terminal device indicates, by using the first information, the capability of the terminal device in the first band in the first band combination in the capability restriction case, so that a network device can learn, in a timely manner, that a capability of the terminal device changes. After receiving the first information, the network device may perform configuration and scheduling based on the restricted capability. A resource scheduled by the network device does not exceed a resource that can be used for the restricted capability of the terminal device, thereby improving resource utilization and enhancing system performance.

## Description

### CROSS-REFERENCE TO RELATED APPLICATIONS

This application claims priority to Chinese Patent Application No. 202311018748.X, filed with the China National Intellectual Property Administration on August 11, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless communication system, two communication parties need to perform capability negotiation to obtain a capability supported by a peer end, to ensure correct data processing. Cellular communication is used as an example. A terminal device sends, to a network device, capability information, such as a multiple-input multiple-output (multiple input multiple output, MIMO) capability, channel bandwidth, and a modulation order, supported by the terminal device. After obtaining the capability information, the network device schedules a radio resource and sends and receives data based on a capability identified by the terminal device, so that a radio resource scheduled for the terminal device does not exceed a capability of the terminal device.

Currently, after the capability information is reported, the capability of the terminal device changes in some scenarios. When the capability of the terminal device changes, how the terminal device reports a changed capability to a network is an urgent problem to be resolved.

### SUMMARY

This application provides a communication method and apparatus, to indicate, to a network when a terminal device is restricted, that a capability of the terminal device is restricted.

According to a first aspect, this application provides a communication method. The method includes: receiving control information, where the control information indicates that reporting of first information is allowed, and the control information is from a network device; and sending the first information, where the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

According to a second aspect, this application provides a communication method. The method includes: sending control information, where the control information indicates that reporting of first information is allowed; and receiving the first information, where the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

According to the foregoing method, the terminal device indicates, by using the first information, the capability of the terminal device in the first band in the first band combination in the capability restriction case, so that the network device can learn, in a timely manner, that the capability of the terminal device changes. After receiving the first information, the network device may perform configuration and scheduling based on the restricted capability. A resource scheduled by the network device does not exceed a resource that can be used for the restricted capability of the terminal device, thereby improving resource utilization and enhancing system performance.

With reference to the first aspect or the second aspect, in an implementation, the capability restriction case means that a plurality of subscriber identity modules work at the same time, or a resource conflict occurs between a plurality of subscriber identity modules.

With reference to the first aspect or the second aspect, in an implementation, the first information further indicates an index of the first band combination in the at least one band combination.

With reference to the first aspect or the second aspect, in an implementation, that the first information indicates the capability of the terminal device in the first band in the first band combination in the capability restriction case includes: the first information indicates that the terminal device supports the first band in the first band combination in the capability restriction case, and at least one capability parameter of the first band in the first band combination, where the at least one capability parameter is a different capability parameter in a capability parameter corresponding to the first band in the first band combination indicated by the first capability information.

According to the foregoing method, the first information indicates a capability restriction capability parameter, so that the network device can determine which capability parameters supported by the terminal device are restricted, and perform resource scheduling for the terminal device based on a restricted capability parameter. Therefore, a resource scheduled by the network device does not exceed a resource that can be used for the restricted capability parameter of the terminal device, thereby improving resource utilization.

With reference to the first aspect or the second aspect, in an implementation, that the first information indicates the capability of the terminal device in the first band in the first band combination in the capability restriction case includes: the first information indicates that the terminal device does not support the first band in the first band combination in the capability restriction case.

With reference to the first aspect or the second aspect, in an implementation, the first band further belongs to a second band combination, and the capability of the terminal device in the first band combination is different from a capability of the terminal device in the first band in the second band combination.

With reference to the first aspect or the second aspect, in an implementation, the first band combination further includes a second band, and the first information further indicates a capability of the terminal device in the second band in the first band combination in the capability restriction case.

With reference to the first aspect or the second aspect, in an implementation, the method further includes: receiving candidate serving frequency information, where the candidate serving frequency information indicates one or more frequencies, each of the one or more frequencies corresponds to one band, and the candidate serving frequency information is from the network device, where each band included in the first band combination is a band in one or more bands corresponding to the one or more frequencies.

In the foregoing method, if the network device sends the candidate serving frequency information, the band included in the first band combination is a band indicated by the candidate serving frequency information, so that signaling overheads caused by sending the first information by the terminal device can be reduced.

With reference to the first aspect or the second aspect, in an implementation, the first band combination includes a band corresponding to a primary cell, and the band corresponding to the primary cell is a band in the one or more bands.

With reference to the first aspect or the second aspect, in an implementation, the method further includes: receiving band combination information, where the band combination information indicates at least one candidate band combination, and each candidate band combination in the at least one candidate band combination is a band combination of a candidate serving cell, where the first band combination is a band combination in the at least one candidate band combination.

With reference to the first aspect or the second aspect, in an implementation, the first information further indicates a frequency band number of the first band; or
the first information further indicates a band entry index of the first band in the first band combination.

With reference to the first aspect or the second aspect, in an implementation, the first capability information includes a first identifier, and the first identifier is for identifying the first capability information.

With reference to the first aspect or the second aspect, in an implementation, the method further includes: sending second information to the network device, where the second information indicates that the terminal device is capability restricted, is in a capability restriction state, or is to be in a capability restriction state.

With reference to the first aspect or the second aspect, in an implementation, the second information further indicates at least one of the following:
whether a current network configuration exceeds a capability of the terminal device in the capability restriction case; and
whether a resource conflict occurs between a plurality of subscriber identity modules in the current network configuration.

With reference to the first aspect or the second aspect, in an implementation, the method further includes: sending candidate serving frequency information, where the candidate serving frequency information indicates one or more frequencies, and each of the one or more frequencies corresponds to one band, where each band included in the first band combination is a band in one or more bands corresponding to the one or more frequencies.

With reference to the first aspect or the second aspect, in an implementation, the first band combination includes a band corresponding to a primary cell, and the band corresponding to the primary cell is a band in the one or more bands.

With reference to the first aspect or the second aspect, in an implementation, the method further includes: sending band combination information, where the band combination information indicates at least one candidate band combination, and each candidate band combination in the at least one candidate band combination is a band combination of a candidate serving cell, where the first band combination is a band combination in the at least one candidate band combination.

According to a third aspect, this application provides a communication method. The method includes: sending a first message to a network device, where the first message includes capability restriction indication information, the capability restriction indication information indicates that a capability of a terminal device is restricted, and the first message is an unencrypted message; and
sending a second message to the network device, where the second message is an encrypted message, and if the terminal device is still capability restricted, the second message includes first indication information, where the first indication information indicates that the terminal device is still capability restricted.

According to the foregoing method, because the first message is unencrypted signaling, the first indication information or the second indication information may be transmitted in the encrypted second message, to determine whether the terminal device is capability restricted, to prevent an attacker (for example, a fake base station) from sending a false first message, thereby damaging system performance.

In an implementation, the first message is a radio resource control RRC connection establishment request message or an RRC establishment complete message.

In an implementation, the second message is an RRC reconfiguration complete message.

In an implementation, the capability restriction indication information further indicates at least one of the following: supporting only a basic capability, where the basic capability is a mandatory capability of incapability signaling; not supporting carrier aggregation or dual connectivity; and not supporting multi-layer multiple-input multiple-output MIMO.

In this implementation, if the capability of the terminal device is not restricted, the second message does not include the first indication information, or the second message includes third indication information, where the third indication information indicates that the capability is not restricted.

According to a fourth aspect, this application provides a communication method. The method includes: receiving a first message from a terminal device, where the first message includes capability restriction indication information, the capability restriction indication information indicates that a capability of the terminal device is restricted, and the first message is a message in a radio resource control RRC connection establishment process; and receiving a second message from the terminal device, where the second message includes first indication information, where the first indication information indicates that the capability is still restricted.

In an implementation, the first message is a radio resource control RRC connection establishment request message or an RRC establishment complete message.

In an implementation, the second message is an RRC reconfiguration complete message.

In an implementation, the capability restriction indication information further indicates at least one of the following: supporting only a basic capability, where the basic capability is a mandatory capability of incapability signaling; not supporting carrier aggregation or dual connectivity; and not supporting multi-layer multiple-input multiple-output MIMO.

In this implementation, if the capability of the terminal device is not restricted, the second message does not include the first indication information, or the second message includes third indication information, where the third indication information indicates that the capability is not restricted.

According to a fifth aspect, this application provides a communication method. The method includes: sending a first message to a network device, where in a capability restriction case, the first message includes capability restriction indication information, and the capability restriction indication information indicates that a capability is restricted and only a basic capability is supported; and sending a second message to the network device, where if the capability is still restricted and only basic capability information is supported, the second message includes first indication information, where the first indication information indicates that the capability is still restricted and only the basic capability is supported; and if the capability is still restricted and a supported third capability is greater than a first capability and less than a second capability, the second message includes second indication information, where the second indication information indicates that the capability is still restricted, and indicates that a supported restricted capability is greater than the basic capability and less than the first capability.

The first capability is a capability indicated by first capability information, the first capability information is capability information reported to a network before the first message is sent, the first message is an unencrypted message, and the second message is an encrypted message.

In an implementation, the first message is a radio resource control RRC connection establishment request message or an RRC establishment complete message.

In an implementation, the second message is an RRC reconfiguration complete message.

In an implementation, if the capability is not restricted, the second message does not include the first indication information or the second indication information, or the second message includes third indication information, where the third indication information indicates that the capability is not restricted.

According to a sixth aspect, this application provides a communication method, where the method includes: receiving a first message from a terminal device, where the first message includes capability restriction indication information, and the capability restriction indication information indicates that the terminal device is capability restricted and supports only a basic capability; and receiving a second message from the terminal device, where the second message includes first indication information or second indication information. The first indication information indicates that the terminal device is still capability restricted and supports only the basic capability, and the second indication information indicates that the terminal device is still capability restricted and indicates that a supported restricted capability is greater than the basic capability and less than a first capability. The first capability is a capability indicated by the first capability information, the first message is an unencrypted message, and the second message is an encrypted message. The first capability information is capability information that is reported by the terminal device to a network before the first message is received.

According to a seventh aspect, this application provides a communication method. The method includes: sending an RRC reconfiguration message to a terminal device; receiving an RRC reconfiguration complete message; and if first capability information of the terminal device indicates that the terminal device supports proactive reporting of a restricted capability, and no capability restriction indication information from the terminal device is received within preset duration, determining that the terminal device is not restricted.

According to the method provided in this application, if the terminal device supports proactive reporting of a restricted capability, and the network device allows the terminal device to proactively report the restricted capability, if the network device does not receive, within specific duration, capability restriction sent by the terminal device, it indicates that a capability currently supported by the terminal device is a full capability that is the same as a capability reported in terminal device capability information, and no temporary capability restriction occurs on the terminal device. In this way, the network device can accurately determine the capability supported by the terminal device, thereby improving system security.

In an implementation, before that no temporary capability restriction occurs on the terminal device is determined, the method further includes: No capability restriction information from the terminal device is received within preset duration after the first message is received.

According to an eighth aspect, this application provides a communication method. The method includes: receiving an RRC reconfiguration message; sending an RRC reconfiguration complete message to a network device; and sending a third message if first capability information indicates that reporting of a capability restriction is supported and a capability is not restricted, where the third message does not include information indicating the capability restriction, or the third message includes third indication information, where the third indication information indicates that supported capability information is the first capability information, and the first capability information is capability information reported to a network before the configuration information is received.

According to a ninth aspect, this application provides a communication method. The method includes: sending an RRC reconfiguration message to a terminal device; receiving an RRC reconfiguration complete message; and receiving a third message from the terminal device, where the third message does not include information indicating a capability restriction, or the third message includes third indication information, where the third indication information indicates that supported capability information is first capability information, and the first capability information is capability information that is from the terminal device before the RRC reconfiguration complete message is received.

According to a tenth aspect, this application further provides a communication apparatus. The communication apparatus can implement any method according to any one of the first aspect to the ninth aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus to perform a corresponding function of the network device or the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal apparatus.

In a possible implementation, the communication apparatus includes corresponding function modules configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a transceiver unit. These units may perform corresponding functions in the foregoing method examples. For details, refer to descriptions in the method according to any one of the first aspect to the ninth aspect. Details are not described herein.

According to an eleventh aspect, a communication apparatus is provided. The apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of any one of the first aspect to the ninth aspect by using a logic circuit or by executing code instructions.

According to a twelfth aspect, a communication apparatus is provided. The apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method according to any possible implementation of any one of the first aspect to the ninth aspect by using a logic circuit or by executing code instructions.

According to a thirteenth aspect, a computer-readable storage medium is provided. The computer-readable storage medium stores a computer program or instructions. When the computer program or the instructions are executed by a processor, the method according to any possible implementation of any one of the first aspect to the ninth aspect is implemented.

According to a fourteenth aspect, a computer program product storing instructions is provided. When the instructions are run by a processor, the method according to any possible implementation of any one of the first aspect to the seventh aspect is implemented.

According to a fifteenth aspect, a circuit is provided. The circuit is configured to perform the method according to any possible implementation of any one of the first aspect to the ninth aspect, and the circuit may include a chip circuit. Optionally, the circuit may be further coupled to a memory.

According to a sixteenth aspect, a chip is provided. The chip includes a processor, configured to implement the method according to any possible implementation of any one of the first aspect to the ninth aspect. Optionally, the chip may further include a memory. The chip may include a chip, or may include a chip and another discrete device.

According to a seventeenth aspect, an embodiment of this application further provides a communication system. The communication system includes: a first apparatus configured to implement the method in the first aspect and any possible implementation of the first aspect; and a second apparatus configured to implement the method in the second aspect and any possible implementation of the second aspect.

According to an eighteenth aspect, an embodiment of this application further provides a communication system. The communication system includes: a first apparatus configured to implement the method in the third aspect and any possible implementation of the third aspect; and a second apparatus configured to implement the method in the fourth aspect and any possible implementation of the fourth aspect.

According to a nineteenth aspect, an embodiment of this application further provides a communication system. The communication system includes: a first apparatus configured to implement the method in the fifth aspect and any possible implementation of the fifth aspect; and a second apparatus configured to implement the method in the sixth aspect and any possible implementation of the sixth aspect.

According to a twentieth aspect, an embodiment of this application further provides a communication system. The communication system includes: a first apparatus configured to implement the method in the seventh aspect and any possible implementation of the seventh aspect; and a second apparatus configured to implement the method in the eighth aspect and any possible implementation of the eighth aspect.

### BRIEF DESCRIPTION OF DRAWINGS

FIG. 1 is a diagram of an architecture of a mobile communication system to which an embodiment of this application is applied;
FIG. 2 is a diagram of a UE capability enquiry and reporting procedure to which an embodiment of this application is applied;
FIG. 3 is a diagram of a capability hierarchy structure of a terminal device;
FIG. 4 is a diagram of a capability reported by a terminal device;
FIG. 5 is a diagram of a network architecture according to an embodiment of this application;
FIG. 6 is a diagram of a network architecture according to an embodiment of this application;
FIG. 7 is a diagram of a network architecture according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a diagram of a structure of a communication apparatus according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

The following describes in detail embodiments of this application with reference to the accompanying drawings of the specification.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

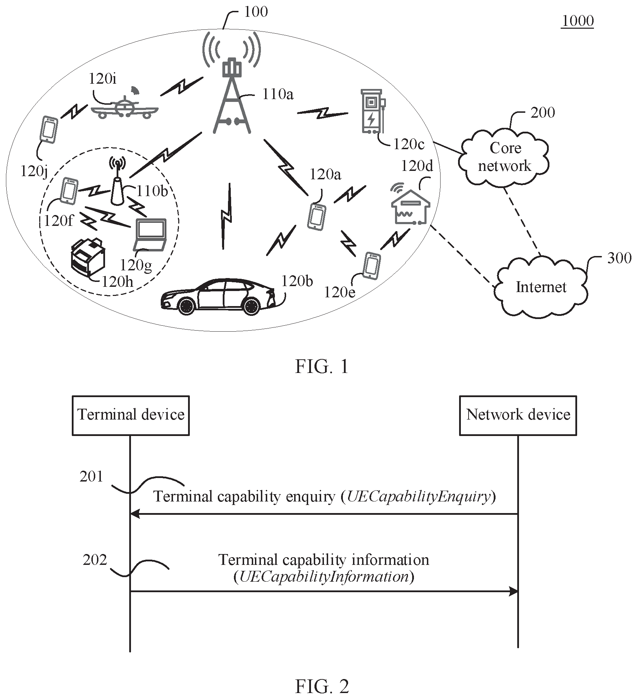

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, reference may be made to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the radio access network device may be referred to as a network device in embodiments of this application.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, smart transportation, and smart city. A function of the terminal may be performed by a module (for example, a chip or a modem) in the terminal, or may be performed by an apparatus including the function of the terminal.

To make the objectives, technical solutions, and advantages of this application clearer, the following further describes this application in detail with reference to the accompanying drawings. A specific operation method in a method embodiment may also be applied to an apparatus embodiment or a system embodiment.

The following describes some terms in embodiments of this application, to facilitate understanding of a person skilled in the art.

### Transmitter (transmitter, TX):

A radio frequency (radio frequency, RF) transmitter is briefly referred to as a transmitter, and is a physical concept. The transmitter may receive a baseband signal from a baseband chip, perform radio frequency processing (such as up-conversion, amplification, and filtering) on the baseband signal to obtain a radio frequency signal, and finally radiate the radio frequency signal into space through an antenna. Specifically, the transmitter may include one or more of electronic devices such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic devices may be integrated into one or more chips based on a requirement. The antenna may also be considered as a part of the transmitter sometimes.

In embodiments of this application, the transmitter may also be replaced with Tx, an antenna, radio frequency, a radio frequency chain, a transmit port, a quantity of radio frequency chains, a quantity of transmission layers, a maximum quantity of transmission layers, a maximum quantity of layers supported for transmission, a receiver, or any combination thereof.

### Carrier aggregation (carrier aggregation, CA) technology:

The carrier aggregation technology means that a plurality of carriers are used to simultaneously provide a service for a terminal device, and a plurality of component carriers (component carriers, CCs) are aggregated, so that a communication bandwidth can be increased, and a peak rate can be increased. Each carrier may have at least one serving cell component carrier working for the terminal device. In the carrier aggregation technology, usually, there is one carrier serving as a primary cell (primary cell, PCell), and another serving cell is a secondary cell (secondary cell, Scell). The secondary cell may be activated or deactivated in a process of using the secondary cell. For example, a network may deactivate the secondary cell if no data is transmitted for a period of time, and may re-activate the secondary cell when data is subsequently sent.

Carrier aggregation is classified into intra-band carrier aggregation and inter-band carrier aggregation. The intra-band carrier aggregation means aggregation of a plurality of carriers in a single band (band, which is also referred to as a frequency band), and the inter-band carrier aggregation means aggregation of a plurality of carriers in a plurality of bands. An example of the inter-band carrier aggregation is as follows: A band combination includes three bands: a band A, a band B, and a band C. There is one carrier in the band A, there are two carriers in the band B, and there are two carriers in the band C. In this case, carrier aggregation may be performed on the one carrier in the band A, the two carriers in the band B, and the two carriers in the band C.

### Dual connectivity (dual connectivity, DC):

Dual connectivity is an operation mode used to enhance cellular cell connectivity of a wireless network. A purpose of dual connectivity is to improve a throughput of a terminal device by using radio resources of a plurality of carriers. In dual connectivity, a terminal device that is in a radio resource control (radio resource control, RRC) connected (RRC connected) mode and that has a plurality of receive/transmit (Rx/Tx) functions may be configured to use radio resources of two base stations with two different scheduling procedures. The two base stations separately perform non-direct backhaul through an X2 interface. Dual connectivity allows the terminal device to send and receive signals on a plurality of carriers in two cell groups through a primary base station and a secondary base station.

Some examples of a dual connectivity scenario may include EN-DC (E_UTRA-NR Dual Connectivity, EN-DC), NE-DC (New Radio E-UTRA Dual Connectivity), and NR-DC (New Radio Dual Connectivity). A type of the dual connectivity scenario is not limited in embodiments of this application.

### UE capability enquiry and reporting:

Different terminal devices may have different capabilities due to different hardware conditions or different software versions. To better provide a service for a terminal device, a network device needs to know a capability of the terminal device, to configure and schedule the terminal device. The capability of the terminal includes a radio access capability of the terminal device, for example, a PDCP layer capability, a radio link control (radio link control, RLC) layer capability, a MAC layer capability, a physical layer capability, a measurement capability, or a radio frequency capability.

FIG. 2 shows a procedure in which a network device queries for capability information of a terminal device. As shown in FIG. 2, in 201, a network device queries a UE capability (UECapabilityEnquiry) from a terminal device. Correspondingly, in 202, the terminal device sends terminal capability information (UECapabilityInformation) to the network device. For example, the terminal device capability information may include the following parameters: a band and a band combination supported by the terminal device, a maximum channel bandwidth capability of a carrier, a multiple-input multiple-output (multiple input multiple output, MIMO) layer quantity, and a modulation order.

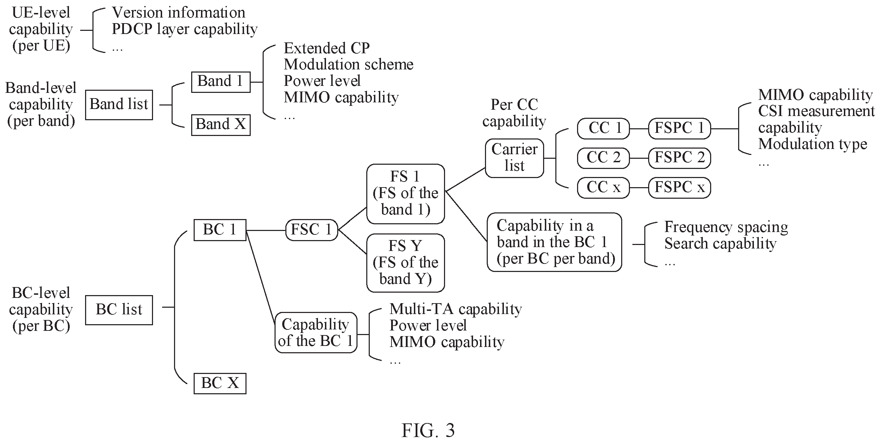

In a 5G system, capabilities of a terminal device may be divided into several levels. FIG. 3 shows an example of a hierarchical structure of capabilities of a terminal device. The hierarchical structure represents a data structure of terminal capability information. As shown in FIG. 3, capability levels of the terminal device may include:
- UE-level capability (which may also be referred to as a terminal device-level capability or per UE capability): The capability is applicable to all bands and band combinations. The per UE capability includes hardware version information and/or software version information, a PDCP layer capability, and the like of the terminal device.
- Band-level capability (which may also be referred to as a frequency band-level capability or per band capability): The capability is usually related to a radio frequency capability of the terminal device. The per band capability may include an extended cyclic prefix (cyclic prefix, CP), a modulation scheme, a power level, a MIMO capability, and the like of a band. A band supported by the terminal device may be represented by using a data structure of a band list.
- Band combination (band combination, BC)-level capability (which may also be referred to as a BC-level capability or per BC capability): The capability is a capability related to a band combination, and the band combination is mainly related to a carrier aggregation capability and a dual connectivity (dual connectivity, DC) capability supported by the terminal device. One band combination may include one or more bands that are supported by the terminal device and that are configured for carrier aggregation or dual connectivity and a carrier included in the band. In other words, for one band combination reported by the terminal device, a network device may configure, for the terminal device, a carrier included in a band in the band combination for carrier aggregation or dual connectivity transmission. In addition, from a perspective of a capability signaling structure, a capability of a single band or a single carrier may also be reported by using a signaling structure of a band combination. The band combination supported by the terminal device is usually related to the radio frequency capability and a baseband capability of the terminal device.

Information about the per BC capability may use a data structure of a band combination list. The band combination list includes at least one band combination supported by the terminal device, and each band combination indicates a band (band) included in the band combination. Each band combination is associated with a feature set combination (feature set combination, FSC). The FSC includes capability information of each band in the band combination (per BC per band capability) and capability information of a component carrier in the band (per CC capability). The per CC capability is a capability of the component carrier in the band in the band combination. Information about the per CC capability may use a data structure of a carrier list. Each component carrier is associated with a feature set per component carrier (feature set per CC, FSPC), and the FSPC indicates a capability of the corresponding component carrier. For example, in FIG. 3, a band 1 in a band combination BC 1 may correspond to one carrier list, and the carrier list includes three component carriers (a CC 1, a CC 2, and a CC x), indicating that the terminal device supports a maximum of three contiguous component carriers in the band 1. The CC 1 is used as an example. The CC 1 is associated with an FSPC 1, and the FSPC 1 indicates a MIMO capability, a channel state information (channel state information, CSI) measurement capability, a modulation type, and the like of the CC 1. Each FSPC includes a FeatureSetDownlinkPerCC information element for reporting a downlink transmission capability and a FeatureSetUplinkPerCC information element for reporting an uplink transmission capability, to respectively indicate a downlink transmission capability and an uplink transmission capability of the terminal device. Therefore, the per CC capability may also be referred to as a feature set per component carrier (feature set per CC, FSPC) capability.

To reduce signaling overheads, the feature set (FS) and the feature set per component carrier (FSPC) may be indexed by using corresponding identifiers (IDs). For example, if FS capabilities corresponding to a band A and a band B are the same, the two bands may be associated with a same FS ID. For another example, if there are two contiguous component carriers (a CC 1 and a CC 2) in a band A, and capabilities of the CC 1 and the CC 2 are the same, the two component carriers may be associated with a same FSPC ID. In this way, repeated reporting of a same capability parameter can be avoided, and signaling overheads can be reduced.

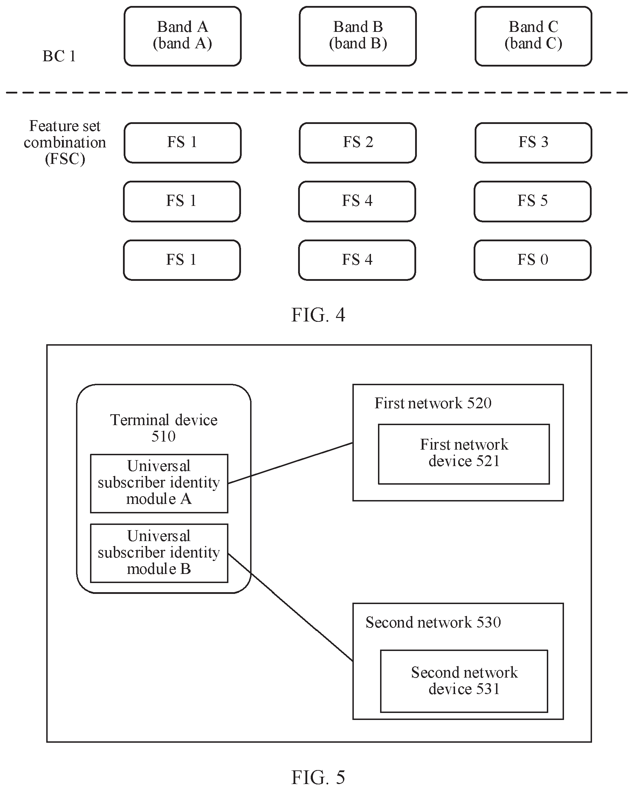

The terminal device may report a combination of per BC per band capabilities in one band combination by reporting one or more rows of feature sets (FSs). FIG. 4 is an example of a diagram of reporting different capabilities (including, for example, per CC capabilities and/or per BC per band capabilities) of one band combination by using a plurality of rows of feature sets (FSs) in a capability signaling structure. As shown in FIG. 4, a band combination BC 1 includes a band A, a band B, and a band C. For the band combination BC 1, the terminal device may report three rows of FSs, and each row of FSs corresponds to a combination of one type of BC capability that can be supported by the terminal device. In a first row of FSs, an FS of the band A is an FS 1 (which may be understood as that an ID of the FS is 1, where the following descriptions are similar), an FS of the band B is an FS 2, and an FS of the band C is an FS 3. The FSs may be considered as a combination of BC capabilities that can be configured by the network for the terminal device. In a second row of FSs, an FS of the band A is still the FS 1, an FS of the band B is an FS 4, and an FS of the band C is an FS 5. Because the FS of the band B is different from the FS of the band B in the first row of FSs, and the FS of the band C is different from the FS of the band C in the first row of FSs, a combination of BC capabilities corresponding to the second row of FSs is different from that corresponding to the first row. Different FSs correspond to different carrier capabilities. For example, the terminal device supports four carriers. In the first row of FSs, the terminal device may report that there is one carrier in the band A (indicating that the terminal device supports one component carrier in the band A, where the following descriptions are similar), there is one carrier in the band B, and there are two carriers in the band C; and in the second row of FSs, the terminal device may report that there is one carrier in the band A, there are two carriers in the band B, and there is one carrier in the band C. Based on capability information reported by the terminal device shown in FIG. 4, when configuring the band combination BC 1 for the terminal device, the network device may configure, based on a feature set of each band in a same row of FSs, a carrier on which the terminal device works. When the network device needs to switch a configuration, the network device may send RRC reconfiguration signaling to the terminal device, to indicate the terminal device to switch to a configuration corresponding to the second row of feature sets.

An FS identifier (FS ID) of a band may be 0. For example, in the third row of FSs in FIG. 4, an FS ID of the band C is an FS 0, indicating that the terminal device does not have an uplink transmission capability and a downlink transmission capability in the band C, that is, the terminal device does not support receiving of a downlink signal and sending of an uplink signal on a carrier of the band C.

### Fallback band combination (fallback band combination):

A fallback band combination is a band combination generated from another band combination by releasing at least one SCell or an uplink configuration of the SCell, a secondary cell group (secondary cell group, SCG), or a supplementary uplink (supplementary UL, SUL) carrier. The band combination is a parent band combination (parent BC) of the fallback band combination. For example, a BC 1 includes a band A, a band B, and a band C. If a BC 2 includes the band A and the band B, the BC 2 is a fallback BC of the BC 1.

Because there are a large quantity of bands and band combinations defined in a protocol, to reduce signaling overheads, in a standard, when reporting a band combination capability, the terminal device is allowed to report a fallback BC whose capability is the same as that of a parent BC, without reporting the fallback BC. If the capability of the fallback BC is different from that of the parent BC, which means that the capability of the fallback BC is higher than that of the parent BC, the terminal device may report the fallback BC.

During UE capability reporting, each band in each band combination may include one or more contiguous or non-contiguous carriers. A band may also be referred to as a frequency band, and each band corresponds to one frequency range. A downlink frequency range and an uplink frequency range of an FDD band are different, and uplink and downlink signals are sent in different frequency ranges. A downlink frequency range and an uplink frequency range of a TDD band are the same, and uplink and downlink signals are sent in a time division manner. For example, an NR band n1 is an FDD band, an uplink frequency range of the FDD band is from 1920 MHz to 1980 MHz, and a downlink frequency range of the FDD band is from 2110 MHz to 2170 MHz. A carrier is a carrier for sending a communication signal, a center frequency of the carrier may be referred to as a carrier frequency, and a size of a frequency range corresponding to the carrier is referred to as carrier bandwidth.

Usually, a capability of the terminal device is relatively static. However, in some scenarios, the capability of the terminal device may change. Currently, the terminal device may indicate a capability update to a network in a manner of re-initiating registration (for example, initiating a mobility registration update). The network queries the capability of the terminal again, and correspondingly, the terminal device reports updated capability information. However, in this manner, each time the terminal device updates the capability, the terminal device needs to exit an RRC connected state to perform a registration procedure, and an ongoing service is interrupted. Therefore, user experience is greatly affected. In some scenarios, a capability of the terminal device may dynamically change. The capability change of the terminal device may include a change in a capability of a band combination supported by the terminal device, or may include a change in another capability of the terminal device, for example, a change in a MIMO layer quantity (MIMO layers), a CC quantity, or a measurement capability.

For example, for a multi-SIM terminal device, a terminal device is equipped with a plurality of subscriber identity modules (subscriber identity module, SIM), universal subscriber identity modules (universal subscriber identity module, USIM), embedded subscriber identity modules (embedded subscriber identity module, eSIM), or universal subscriber identity modules (multi-universal subscriber identity module, MUSIM). It should be understood that the plurality of subscriber identity modules herein may be physical telephone cards, or may be a plurality of virtual or logical subscriber identity modules, and the plurality of subscriber identity modules are also referred to as a plurality of SIMs for short below. The terminal device may register with different networks such as different access network devices and/or core network devices by using a plurality of SIM cards, or may access a same network device. For a multi-SIM terminal device, a plurality of SIMs share a hardware resource of the terminal. Therefore, when only a single SIM works and when a plurality of SIMs work at the same time, a capability of the terminal device may dynamically change. When configurations of different network devices corresponding to the plurality of SIMs are different, each SIM occupies a different resource and has a different processing capability, and the capability of the terminal device also dynamically changes. In this case, if the capability of the terminal device is updated in a manner of re-registration in a conventional technology, multi-SIM user experience is severely affected. Therefore, the present invention provides a temporary capability suppression manner, so that a capability can be updated when a terminal device remains in an RRC connected state, thereby reducing service interruption and ensuring dynamic capability update.

As shown in FIG. 5, a quantity of a plurality of universal subscriber identity modules is 2. The two universal subscriber identity modules specifically include a universal subscriber identity module A and a universal subscriber identity module B. Actually, a quantity of universal subscriber identity modules of a terminal device 510 is not limited. The universal subscriber identity module A may also be referred to as a first universal subscriber identity module, and the universal subscriber identity module B may also be referred to as a second universal subscriber identity module. The universal subscriber identity module may be considered as a logical concept. For example, the universal subscriber identity module may be a SIM, an eSIM, or another information module or identification module that can identify the terminal device 510.

The universal subscriber identity module A and the universal subscriber identity module B may be provided by a same operator, and correspondingly, a first network 520 and a second network 530 may also correspond to a same operator. Alternatively, the universal subscriber identity module A and the universal subscriber identity module B may be provided by different operators, and correspondingly, a first network 520 and a second network 530 may also correspond to different operators.

The first network 520 may be configured to provide a service for the universal subscriber identity module A. This may also be described as that the first network 520 corresponds to the universal subscriber identity module A of the terminal device 510. The first network 520 may include one or more devices configured to provide a communication service for the terminal device 510. For example, the first network 520 includes a first network device 521, and the first network device 521 is configured to provide a service for the universal subscriber identity module A of the terminal device 510. This may also be described as that the first network device 521 corresponds to the universal subscriber identity module A of the terminal device 510. Because the first network device 521 belongs to the first network 520, the first network device 521 in this embodiment of this application may also be replaced with the first network 520. The first network device 521 is, for example, an access network device or a core network device.

Similarly, the second network 530 may be configured to provide a service for the universal subscriber identity module B. This may also be described as that the second network 530 corresponds to the universal subscriber identity module B of the terminal device 510. The second network 530 may include one or more devices configured to provide a communication service for the terminal device 510. For example, the second network 530 includes a second network device 531, and the second network device 531 is configured to provide a service for the universal subscriber identity module B of the terminal device 510. This may also be described as that the second network device 531 corresponds to the universal subscriber identity module B of the terminal device 510. Because the second network device 531 belongs to the second network 530, the second network device 531 in this embodiment of this application may also be replaced with the second network 530. The second network device 531 is, for example, an access network device or a core network device.

With reference to the foregoing descriptions, it can be known that, from a perspective of a network side, one universal subscriber identity module corresponds to one independent terminal device, and two universal subscriber identity modules correspond to two different terminal devices. However, for a terminal device, from a perspective of costs and resource utilization efficiency, the two universal subscriber identity modules usually share hardware resources such as radio frequency resources and baseband processing resources in the terminal device. In other words, resources occupied by the two universal subscriber identity modules are not hard split (hard split), but are dynamically shared. Therefore, for one (for example, the universal subscriber identity module A) of the universal subscriber identity modules, a capability that can be supported by the universal subscriber identity module A when only a single SIM works, that is, only the universal subscriber identity module A works, is different from a capability that can be supported by the terminal device when dual SIMs work (for example, both the universal subscriber identity module A and the universal subscriber identity module B are in an RRC connected state).

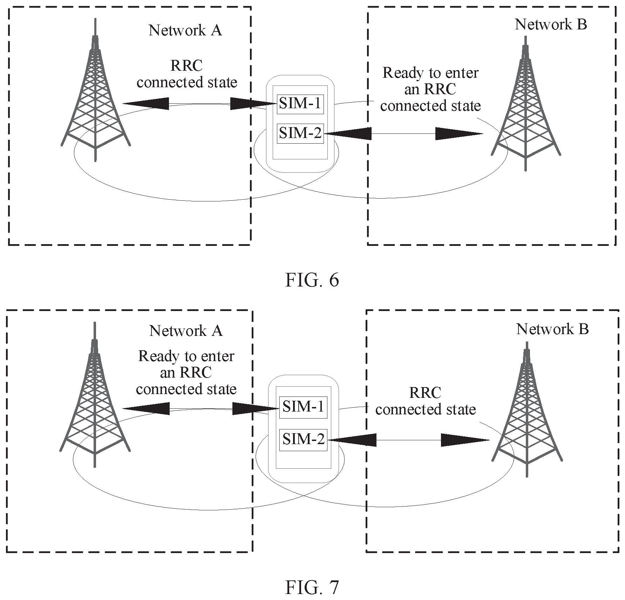

For example, as shown in FIG. 6, a SIM-1 of a terminal device is in an RRC connected state in a network A to receive and send data, and a SIM-2 of the terminal device is in an RRC non-connected state (for example, an RRC idle state or an RRC inactive state) in a network B. If the SIM-2 of the terminal device has a downlink or uplink service that arrives on the network B and is ready to enter an RRC connected state, because the SIM-2 is to occupy a part of resources of the terminal device, the terminal device needs to notify the network A that a capability temporarily changes or is temporarily suppressed, to ensure that configuration and scheduling delivered by the network match a current actual capability of the terminal device, and avoid that the terminal device cannot correctly receive data because the network configuration or scheduling exceeds the actual capability of the terminal device.

For example, a radio frequency resource of the terminal device includes three radio frequency links. In the network A corresponding to the SIM-1, three configured CCs include a primary component carrier (primary carrier component, PCC) on a band (band) A, a secondary component carrier (secondary carrier component, SCC) 1 on a band B, and an SCC 2 on a band X. The PCC is associated with a radio frequency link 1 of the terminal device, the SCC 1 is associated with a radio frequency link 2 of the terminal device, and the SCC 2 is associated with a radio frequency link 3 of the terminal device. In the network B corresponding to the SIM-2, a configured CC is a PCC, and is associated with the radio frequency link 3 of the terminal device. Because the radio frequency link 3 is associated with two CCs, but the radio frequency link can provide a service for only one of the CCs at a same moment, a conflict may occur on radio frequency resources used by the terminal device when the terminal device is in the RRC connected state on the two CCs at the same time. When the network A schedules the terminal device to perform data transmission on the two CCs at the same time, the terminal device can transmit data on only one of the CCs, and cannot transmit data on the other CC.

In another scenario, as shown in FIG. 7, from another perspective, if the SIM-2 of the terminal device has performed a service in the RRC connected state, the SIM-1 of the terminal device is in the RRC non-connected state in the network A. If the SIM-1 of the terminal device has a downlink or uplink service that arrives and is ready to enter the RRC connected state, because the SIM-2 has occupied a part of resources, the SIM-1 cannot use all capabilities to communicate on the network A. In this case, in a process in which the SIM-1 enters or restores from the RRC non-connected state (for example, the RRC idle state or the RRC inactive state) to the RRC connected state, the terminal device may notify the network A of temporary capability suppression, to avoid that a configuration delivered by the network exceeds an actual capability after the RRC connected state is entered.

In some other scenarios, when temperature of the terminal device is excessively high, to reduce the temperature of the terminal device, the terminal device may actively reduce a capability of the terminal device, to reduce the temperature. Alternatively, when the terminal device communicates by using different access technologies at the same time, for example, communicating by using both a cellular network and a non-cellular network, simultaneous working cannot be performed because interference exists between bands for the networks. Alternatively, the terminal device performs unicast communication in a serving cell, and receives a multicast broadcast service (multicast broadcast service, MBS) in a non-serving cell, both of which may cause a capability change of the terminal device.

Therefore, this application provides a method, so that when a capability of a terminal device changes, the terminal device can report a changed capability to a network.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In this application, when the following method procedures are applied to the system shown in FIG. 1, the network device, the module in the network device, or the chip in the first network device in FIG. 1 may perform the method performed by a network device in the following procedures, and the terminal device, the module in the terminal device, or the chip in the terminal device in FIG. 1 may perform the method performed by a terminal device in the following procedures. It may be understood that a specific structure of an execution body of the method provided in embodiments of this application is not specifically limited in embodiments shown below, provided that a program that records code of the method provided in embodiments of this application can be run to perform communication according to the method provided in embodiments of this application. The following uses only the terminal device or the network device as an example for description.

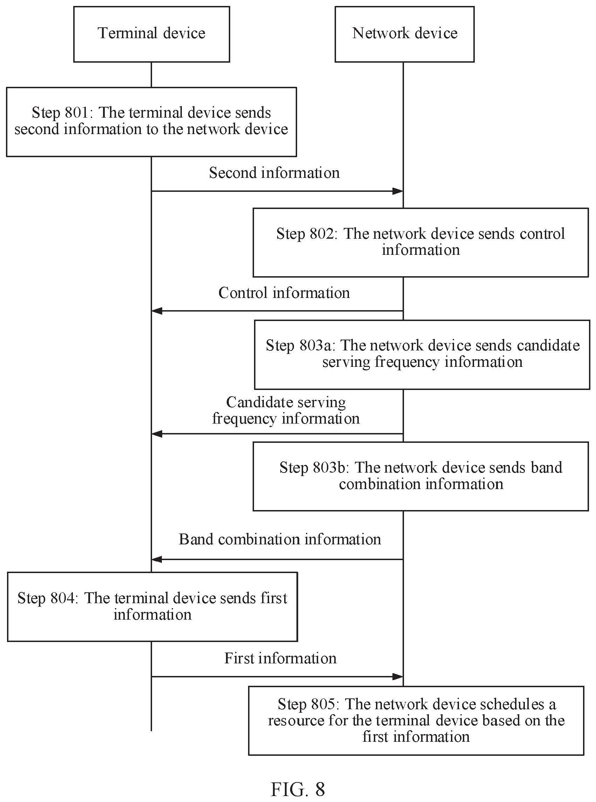

FIG. 8 is a schematic flowchart of a communication method according to an embodiment of this application. The method includes the following steps.

Step 801: A terminal device sends second information to a network device.

Correspondingly, the network device receives the second information.

In this application, the second information indicates that the terminal device is capability restricted, the terminal device is in a capability restriction state, the terminal device is to be in a capability restriction state, or the terminal device is in or is to be in a dual-SIM dual active state.

In this application, the capability restriction may be replaced with a temporary capability restriction (temporary capability restriction), a temporary capability limitation, or a temporary capability change. A resource conflict may be replaced with a band conflict, a band combination conflict, or a carrier combination conflict. The dual-SIM dual active state may be replaced with/understood as that dual SIMs work simultaneously, dual SIMs are in an RRC connected state simultaneously, dual SIMs have services simultaneously, or dual-SIM dual active (dual-SIM dual active, DSDA).

In this application, a capability restriction case means that a plurality of subscriber identity modules in the terminal device work at the same time, so that a capability of the terminal device in a network corresponding to each subscriber identity module is restricted. Alternatively, a capability restriction case means that a resource conflict occurs between a plurality of subscriber identity modules in the terminal device, so that a capability of the terminal device in a network corresponding to each subscriber identity module is restricted. Alternatively, a capability restriction case means that because a plurality of access technologies interfere with each other in the terminal device, the terminal device simultaneously performs a plurality of services, the terminal device is overheated, or the terminal device is excessively cold, a capability of the terminal device in a network is restricted. In the capability restriction case, the capability of the terminal device in the network corresponding to each subscriber identity module is less than a capability reported by the terminal device in the network corresponding to each subscriber identity module, or the capability of the terminal device in the network is less than a capability reported by the terminal device to the network.

That the terminal device is capability restricted indicates that a current capability of the terminal device changes or a capability of the terminal device is about to change. A changed capability of the terminal device is less than a capability indicated by the terminal device by using first capability information.

In an implementation, the capability restriction may be a proactive capability restriction and a passive capability restriction.

If a current configuration causes a conflict between resources occupied by two subscriber identity modules in the terminal device or the resources occupied by the two subscriber identity modules to conflict, the terminal device sends the second information. This manner may be understood as a passive capability restriction. If no conflict occurs between the two subscriber identity modules temporarily in the current configuration, but the terminal device indicates a capability change to the network in advance, to avoid that a configuration that may be delivered by the network in the future exceeds the capability of the terminal device. This manner may be understood as a proactive capability restriction.

When the second information is sent is not limited in this application. For example, in a first implementation, the second information may be sent in an RRC establishment process, an RRC resume process, or an RRC re-establishment process. For example, if the terminal device is already in an RRC connected state with a second network by using a SIM card 2, and the terminal device is to establish an RRC connection, resume an RRC connection, or re-establish an RRC connection to a first network by using a SIM card 1, the terminal device may send the second information to the first network in an RRC establishment/resume/re-establishment process of the terminal device. The second information may be carried in a message 3 (msg3), an RRC establishment request message, an RRC establishment complete message, an RRC resume request message, an RRC resume complete message, an RRC re-establishment request message, or an RRC re-establishment complete message in a random access process. This is not limited in this application.

In a second implementation, the second information may alternatively be sent in a process in which the terminal device is in an RRC connected state. For example, in a process in which the terminal device establishes the RRC connected state with a first network by using a SIM card 1, when a downlink service or an uplink service arrives in a second network corresponding to a SIM card 2 in the terminal device, the terminal device may send the second information to the first network by using the SIM card 1. The second information may be carried in RRC signaling. For example, the second information may be carried in user equipment assistance information (UE assistance information, UAI). In this case, for the first network by using the SIM card 1 and the second network corresponding to the SIM card 2 under the current configuration, a resource conflict may occur between the two SIM cards of the terminal device, or a resource conflict may be yet to occur between the two SIM cards.

In this application, the second information may further indicate other information. For example, the second information further indicates at least one of the following:
whether a current network configuration exceeds the capability of the terminal device in the capability restriction case; and
whether a resource conflict occurs between a plurality of subscriber identity modules in the current network configuration.

In an implementation, the second information includes 1 bit, and when the bit included in the second information is a first value, it indicates that the capability of the terminal device is restricted.

In an implementation, the second information indicates a capability restriction capability parameter, for example, affected frequency information/frequency identifier information, affected band information/band identifier information, or an affected cell identifier, or indicates a reduced MIMO layer quantity capability/measurement capability/quantity of supported carriers. The affected band may also be understood as a band in which a resource conflict exists, or a band in which the terminal device expects or requests the network device to release a serving cell in the band. The affected cell may also be understood as a cell in which a resource conflict exists, or a cell that the terminal device expects or requests the network device to release. A capability corresponding to the capability restriction capability parameter is lower than a capability that is initially reported by the terminal device to the network in UE capability information (UE capability information). The capability corresponding to the capability restriction capability parameter may also be lower than the current network configuration, or may exceed the current network configuration. For example, in the UE capability information, a quantity of MIMO layers supported by a carrier 1 is 4, and a quantity of MIMO layers of the carrier 1 in the current network configuration is 1. The second information may indicate that a quantity of MIMO layers of the carrier 1 currently supported by the terminal device is 2, that is, greater than the quantity of MIMO layers in the current network configuration. In this scenario, a resource conflict may be yet to occur. Alternatively, in the terminal device capability information, a quantity of MIMO layers supported by a carrier 1 is 4, and a quantity of MIMO layers of the carrier 1 in the current network configuration is 2. The second information may indicate that a quantity of MIMO layers of the carrier 1 currently supported by the terminal device is 1, that is, less than the quantity of MIMO layers in the current network configuration. In this scenario, the network configuration already exceeds the capability of the terminal device, and a resource conflict has occurred between two SIM cards in the terminal device.

In an implementation, the network device sends signaling to the terminal device. The signaling is a request or an indication indicating that the terminal device is allowed to send capability restriction information (for example, the second information). In other words, the second information sent by the terminal device is controlled by the network. The terminal device can request a capability restriction of the terminal device only when the network device allows sending of the second information. The signaling sent by the network device may be carried in a system message, or may be carried in an RRC reconfiguration message. This is not limited in this application.

In an implementation, before sending the second information, the terminal device reports, to the network in the UE capability information (UE capability information), whether the terminal device supports a capability of a capability restriction, a temporary capability change, or a temporary capability restriction. The terminal device can send the second information only when the terminal device supports reporting of the second information and the network device allows reporting of the second information. Optionally, the terminal device capability information indicates whether the terminal device supports a proactive capability restriction and/or a passive capability restriction. In a possible implementation, the proactive capability restriction and the passive capability restriction are indicated by using two different pieces of information respectively in the UE capability information. One piece of information indicates whether the proactive capability restriction is supported, and the other piece of information indicates whether the passive capability restriction is supported.

Step 801 is an optional step. Alternatively, the terminal device may not send the second information. Whether the terminal device sends the second information is not limited in this application.

Step 802: The network device sends control information.

Correspondingly, the terminal device receives the control information, where the control information indicates that reporting of first information is allowed.

If the control information indicates that reporting of the first information is not allowed, the terminal device cannot send the first information.

The control information may be carried in a system message, or may be carried in an RRC message. This is not limited in this application. Step 802 may be performed before step 801.

Step 803a: The network device sends candidate serving frequency information.

Correspondingly, the terminal device receives the candidate serving frequency information, where the candidate serving frequency information indicates one or more frequencies, and each of the one or more frequencies corresponds to one band. The one or more frequencies may be replaced with one or more bands, frequency band numbers, frequency band indexes, or frequency band identifiers.

The one or more frequencies indicated by the candidate serving frequency information may include a frequency of a serving cell currently configured by the network device, or may include a frequency that is currently not configured as a serving cell, and the frequency that is currently not configured as a serving cell may be configured as a serving cell in the future.

The one or more bands corresponding to the one or more frequencies indicated by the candidate serving frequency information may be a part of bands supported by the terminal device. To be specific, the terminal device supports a plurality of bands. The plurality of bands supported by the terminal device include the one or more bands corresponding to the one or more frequencies. The terminal device may indicate, by using the first capability information, the bands supported by the terminal device.

The first capability information is capability information reported to the network before the first information is sent. For example, the first capability information is capability information reported by the terminal device when the terminal device initially accesses the network. The first capability information is UE capability information (UECapabilityInformation), and the first capability information may also be referred to as terminal device capability information or another name. The terminal device stores the terminal device capability information. The terminal device capability information may indicate a radio access capability of the terminal device, for example, indicate a PDCP layer capability, an RLC layer capability, a MAC layer capability, a physical layer capability, a measurement capability, and a radio frequency capability. In a process in which the terminal device is powered on and attached (attach) to a network, the terminal device may report the terminal device capability information to the network. For example, the terminal device may report the terminal device capability information according to a procedure shown in FIG. 2.

The first capability information may further indicate other information. For example, the first capability information indicates at least one band combination supported by the terminal device and a capability of the at least one band combination. The first capability information may further indicate the following parameters: a band and a band combination supported by the terminal device, a maximum channel bandwidth capability of a carrier, a multiple-input multiple-output (multiple input multiple output, MIMO) layer quantity, and a modulation order. For specific content of the first capability information, refer to related descriptions of the terminal capability information (UECapabilityInformation). Details are not described herein again.

In an implementation, the first capability information includes a first identifier, and the first identifier is for identifying the first capability information. The first identifier indicates a version of the first capability information reported this time, or a version of a BC list in the first capability information reported this time. For example, a first identifier of the first capability information reported for the first time (initially reported) is #0. If the capability of the terminal device changes, after capability information is reported again according to the procedure in FIG. 2, the first identifier of the first capability information reported by the terminal device changes to #1. The capability change may be a capability change triggered by the terminal device to the network device by using a mobility registration update procedure.

In an implementation, the candidate serving frequency information may include an absolute frequency location of each frequency in the one or more frequencies, where the absolute frequency location of each frequency is indicated by an absolute radio frequency channel number (absolute radio-frequency channel number, ARFCN), and the absolute frequency location may point to a location of a synchronization signal broadcast channel block (synchronous signal/physical broadcast channel block, SS/PBCH block, SSB) of a candidate serving cell corresponding to each frequency.

In an implementation, the candidate serving frequency information may indicate one or more bands, and each band may be indicated by using a frequency band number (frequency band number). For example, a frequency band number may be indicated by using a frequency band indicator NR (FreqBandIndicatorNR) field.

In an implementation, when the terminal device sends the second information, the network device may determine, based on the second information sent by the terminal device, that the candidate serving frequency information needs to be sent. To be specific, when determining that the capability of the terminal device is restricted, the network device sends the candidate serving frequency information if the network device expects the terminal device to proactively report a band/band combination capability that may be affected. In this way, signaling overheads caused by sending the candidate serving frequency information by the network device can be reduced.

In an implementation, when the terminal device does not send the second information, the network device may also send the candidate serving frequency information, regardless of whether the terminal device is in a capability restriction.

A condition for sending the candidate serving frequency information by the network device may further include: The terminal device reports, in the first capability information, whether the terminal device supports a capability of proactively reporting a restricted capability. When the terminal device supports proactive capability restriction reporting, the network device may send the candidate serving frequency information. When the terminal device does not support proactive capability restriction reporting, the network device does not send the candidate serving frequency information. When the terminal device does not send the second information, the network device may send the candidate serving frequency information based on the first capability information of the terminal device.

Step 803a is an optional step. Alternatively, the network device may not send the candidate serving frequency information. This is not limited in this application.

In an implementation, step 803a may also be replaced with step 803b.

Step 803b: The network device sends band combination information.

Correspondingly, the terminal device receives the band combination information, where the band combination information indicates at least one candidate band combination, and each candidate band combination in the at least one candidate band combination is a band combination of a candidate serving cell.

In an implementation, the band combination information further indicates an index of each candidate band combination in the at least one candidate band combination, and the index of the candidate band combination is an index of the candidate band combination in at least one band combination indicated by the first capability information.

In an implementation, the band combination information includes an index or a sequence number (BC index) of each candidate band combination in the at least one candidate band combination.

The at least one candidate band combination indicated by the band combination information may be a band combination supported by the terminal device.

For example, in an implementation 1, when the terminal device sends the second information, the network device may determine, based on the second information sent by the terminal device, that the band combination information needs to be sent. To be specific, when determining that the capability of the terminal device is restricted, the network device sends the band combination information if the network device expects the terminal device to proactively report a band/band combination capability that may be affected.

For example, in an implementation 2, when the terminal device does not send the second information, the network device may alternatively send the band combination information, regardless of whether the terminal device is in a capability restriction.

A condition for sending the band combination information by the network device may further include: The terminal device reports, in the first capability information, whether the terminal device supports a capability of proactively reporting a restricted capability. When the terminal device supports proactive capability restriction reporting, the network device may send the band combination information. When the terminal device does not support proactive capability restriction reporting, the network device does not send the band combination information. When the terminal device does not send the second information, the network device may send the band combination information based on the first capability information of the terminal device.

Step 803b is an optional step. Alternatively, the network device may not send the band combination information. This is not limited in this application.

Step 804: The terminal device sends the first information.

Correspondingly, the network device receives the first information.

In an implementation, when the terminal device is in the capability restriction case, the terminal device may send the first information; or if the terminal device is not in the capability restriction state, the terminal device does not need to send the first information. The capability restriction case may mean that a capability currently supported by the terminal device is lower than a capability reported by the terminal device to the network device in the terminal device capability information (for example, UEcapabilityinformation) based on capability enquiry of the network device.

In this application, the first information may indicate one or more band combinations in the at least one band combination supported by the terminal device, and indicate a capability of the terminal device in at least one band in each of the one or more band combinations in the capability restriction case. For any one of the one or more band combinations, a capability that is in at least one band in the band combination and that is indicated by the first information is lower than a capability that is in at least one band in the band combination and that is indicated by the first capability information.

For example, if a capability of the terminal device in a first band in a first band combination is restricted, the first information indicates a capability of the terminal device in the first band in the first band combination in the capability restriction case. The first band combination belongs to the at least one band combination supported by the terminal device, or the first band combination belongs to a fallback band combination of one of the at least one band combination supported by the terminal device. The capability in the first band in the first band combination indicated by the first information is lower than a capability in the first band in the first band combination indicated by the first capability information, and the first capability information indicates a capability in the at least one band combination supported by the terminal device.

Alternatively, the first band may belong to a second band combination, and the second band combination is in the at least one band combination supported by the terminal device. The capability of the terminal device in the first band in the first band combination may be the same as a capability of the terminal device in the first band in the second band combination, or may be different from the capability of the terminal device in the first band in the second band combination. This is not limited in this application. If the capability of the terminal device in the first band in the second band combination is not restricted, the terminal device may not indicate, by using the first information, the capability of the terminal device in the first band in the second band combination in the capability restriction case.

In an implementation, if the terminal device receives the candidate serving frequency information, the candidate serving frequency information indicates the one or more bands corresponding to the one or more frequencies, and each of the one or more frequencies corresponds to one band, each band included in the first band combination is a band in the one or more bands corresponding to the one or more frequencies.

In an implementation, the first band combination includes a band corresponding to a current primary cell. To be specific, the terminal device indicates, in the first information, only a band combination including the band of the current primary cell. In other words, the terminal device reports only a band combination supported by the current PCell.

In an implementation, the first band combination includes only a band corresponding to a current primary cell; or the first band combination includes a band corresponding to a current primary cell and at least one band indicated by the candidate serving frequency information. For example, if the candidate serving frequency information includes only a band of a candidate SCell, the terminal device reports only a band combination including a band of the current PCell and the band of the candidate SCell queried by the network.

In an implementation, if the terminal device receives the band combination information, the first band combination indicated by the first information is one of the at least one candidate band combination. Alternatively, the first band combination indicated by the first information is a fallback band combination of one of the at least one candidate band combination.

In an implementation, the first capability information may include a first feature set combination (first FSC) associated with the first band combination, and the first FSC associated with the first band combination includes capability information (per BC per band capability) in each band in the first band combination. The capability, indicated by the first information, of the terminal device in the first band in the first band combination is lower than a capability corresponding to capability information in the first band in the first FSC.

How the first information indicates the capability of the terminal device in the first band in the first band combination is not limited in this application. For example, there may be the following implementations.

Implementation 1: The first information indicates that the terminal device supports the first band in the first band combination in the capability restriction case.

For example, the first band combination includes three bands: a band A, a band B, and a band C, and the terminal device supports the band A and the band B in the first band combination in the capability restriction case. In this case, the first information indicates the band A and the band B, and the first information does not indicate the band C. In this case, the band A and the band B are the first band.

In a possible implementation of indicating the first band, an identifier or an index of the first band is indicated. The index of the first band may indicate a location of the first band in the at least one supported band reported by the terminal device in the first capability information, or may indicate a location of the first band in the first band combination in the first capability information.

Implementation 2: The first information indicates that the terminal device supports the first band in the first band combination in the capability restriction case, and at least one capability parameter of the first band in the first band combination, where the at least one capability parameter is a different capability parameter in a capability parameter corresponding to the first band in the first band combination indicated by the first capability information. For example, the at least one capability parameter includes at least one of the following: a modulation scheme, a power level, a MIMO layer quantity, component carrier (component carrier, CC) bandwidth, and a CC quantity. The capability parameter may be a capability parameter of a carrier of the first band.

In this implementation, in the capability restriction case, the terminal device still supports a configuration of the first band combination as a CA/DC band combination, but a capability supported in the first band is lower.

The first band combination includes at least two bands. For a band, for example, a second band, other than the first band in the first band combination, in the capability restriction case, if a capability of the terminal device in the second band in the first band combination remains unchanged, the first information does not indicate the capability of the terminal device in the second band in the first band combination. If the capability of the terminal device in the second band in the first band combination also changes when the capability of the terminal device is restricted, the first information further indicates the capability of the terminal device in the second band in the first band combination in the capability restriction case. In this method, only a capability in a band with a capability change is indicated, so that signaling overheads can be reduced.

For example, the first band combination includes a band A, a band B, and a band C, and the first band is the band C. The first capability information indicates that a MIMO layer quantity supported by the terminal device in the first band in the first band combination is 4. In the capability restriction case, the first information indicates that a MIMO layer quantity supported by the terminal device in the first band in the first band combination is 2.

Implementation 3: The first information indicates that the terminal device does not support the first band in the first band combination in the capability restriction case. In this implementation, when the first information indicates that the terminal device does not support the first band in the first band combination, it may also indicate that the terminal device does not support the first band combination. Alternatively, in this implementation, the information indicated by the first information may be: In the capability restriction case, the terminal device does not support the first band combination, and does not support the first band in the first band combination.

For example, if the first information indicates that a band C is a band that does not support a configuration of being a serving carrier (or a serving cell), and a first band combination in which the band C is located includes a band A, a band B, and the band C, it indicates that the terminal device does not support a CA/DC band combination, namely, band A+band B+band C, configured by the network, that is, does not support a carrier configured in the band C. Further, the terminal device may support a band combination configured as band A+band B.

In an implementation, if the first information indicates that the terminal device does not support the first band in the first band combination in the capability restriction case, it only indicates that the terminal device does not support the first band combination in the capability restriction case, but does not indicate that the terminal device does not support another band combination including the first band, or does not indicate that the terminal device does not support a case in which only the first band is configured as a single-carrier serving carrier (or serving cell). The other band combination including the first band may be a fallback band combination of the first band combination, or may be a band combination indicated by the first capability information.

For example, the first information indicates that the first band combination that is not supported by the terminal device includes a band A, a band B, and a band C, and the first band is the band C. Based on the first information, the terminal device does not support the first band combination, but the terminal device may further support a band combination including the band B and the band C, a band combination including the band A and the band C, and the band C.

In an implementation, the first information indicates that the terminal device does not support the first band in the first band combination in the capability restriction case. If the first band combination includes a band of a primary cell, it only indicates that the terminal device does not support the first band combination in the capability restriction case, but the terminal device further supports a band combination that satisfies the following condition: including the band of the current primary cell and the first band. The band combination that satisfies the condition may be a fallback band combination of the first band combination, or may be a band combination indicated by the first capability information.

For example, the first information indicates that the first band combination that is not supported by the terminal device includes a band A, a band B, and a band C, the first band is the band C, and the band of the current primary cell is the band A. Based on the first information, the terminal device does not support the first band combination, but the terminal device may further support a band combination including the band A and the band C.

In an implementation, the first information indicates that the terminal device does not support the first band in the first band combination in the capability restriction case. If the first band combination includes a band of a primary cell, it only indicates that the terminal device does not support the first band combination in the capability restriction case, but the terminal device further supports a band combination that satisfies the following condition: including the band of the current primary cell and the first band. The band combination that satisfies the condition may be a fallback band combination of the first band combination, or may be a band combination indicated by the first capability information. The terminal device may further support a case in which only the first band is configured as a single-carrier serving carrier (or serving cell).

For example, the first information indicates that the first band combination that is not supported by the terminal device includes a band A, a band B, and a band C, the first band is the band C, and the band of the current primary cell is the band A. Based on the first information, the terminal device does not support the first band combination, but the terminal device may further support a band combination including the band A and the band C, and the terminal device further supports a case in which only a carrier of the band C is configured as a serving carrier (or a serving cell).

### Implementation 4:

In the implementation 4, the implementation 2 may be combined with the implementation 1. The first information indicates that the first band combination supports the first band. When the capability in the first band changes, the first information further indicates at least one capability parameter of the first band. When the capability of the first band does not change, the first information does not indicate a capability parameter of the first band. For example, the first band combination includes three bands: a band A, a band B, and a band C, the terminal device supports the band A and the band B in the first band combination and does not support the band C in the capability restriction case, where a capability in the band A changes. In this case, the first information indicates the band A and the band B, and the first information further indicates at least one capability parameter in the band A, for example, a quantity of MIMO layers supported by a carrier of the band A. The at least one capability parameter is a capability parameter that changes relative to a capability parameter in the band A in the first band combination in the first capability information. For the band B in the first band combination, if the capability supported by the terminal device remains unchanged, the first information does not indicate at least one capability parameter of the terminal device in the band B in the first band combination. In other words, in the implementation 4, the first information indicates a band supported by the terminal device in the first band combination and a capability that changes in the supported band in the capability restriction case. If the at least one capability parameter is not indicated for the band supported in the first band combination indicated by the first information, a capability in the band (the band B) remains unchanged.

### Implementation 5:

In the implementation 5, the implementation 2 may be combined with the implementation 3. The first information indicates that the first band is not supported in the first band combination, and the first information further indicates that the terminal device supports the first band in the first band combination in the capability restriction case and at least one capability parameter of the first band in the first band combination. For example, the first band combination includes three bands: a band A, a band B, and a band C, and in the capability restriction case, the terminal device supports the band A and the band B in the first band combination and does not support the band C, where a capability in the band A supported by the terminal device changes. In this case, the first information indicates the band A and the band C, and the first information further indicates at least one capability parameter in the band A, for example, a quantity of MIMO layers supported by a carrier of the band A. The at least one capability parameter is a capability parameter that changes relative to a capability parameter in the band A in the first band combination in the first capability information. For the band B in the first band combination, if the capability supported by the terminal device remains unchanged, the first information does not indicate the band B. In other words, in the implementation 5, the first information indicates only the first band combination and a band with a capability change in the first band combination, and the band with the capability change includes a band that changes from being supported to being not supported and a band in which the at least one capability parameter changes.

According to the foregoing method, in the capability restriction case, excessive suppression in a band/band combination can be avoided, and band configuration flexibility of the terminal device can be improved.

In this application, the first information may further indicate the first band combination and the first band. For example, the first information may indicate the first band combination and the first band in the following manners.

In a first implementation, the first information indicates an index of the first band combination in the at least one band combination supported by the terminal device. In this case, the index of the first band combination may be a location sequence number of the first band combination in the at least one band combination. For example, the at least one band combination supported by the terminal device is in a BC list (BClist). For example, if the BC list includes 100 BCs in total, an index of a BC that is ranked first is 1, an index of a BC that is ranked second is 2, and indexes of other BCs are deduced by analogy. If the first band combination is the 2^{nd} BC in the BC list, the first information may indicate that the index of the first band combination may be 2.

In this implementation, because there are a plurality of types of BC lists in the terminal device capability, for example, a BC list for dual connectivity (dual connectivity, DC), a BC list for NR standalone (SA), a BC list for uplink antenna switch (uplink Tx Switch), and a BC list for a sidelink (sidelink), the first information may further indicate a BC list in which the BC list corresponding to the first band combination is located. Optionally, the band combination information further indicates an identifier of a band combination list. For example, the first capability information includes a band combination list A, a band combination list B, and a band combination list C. The band combination information includes an identifier of a band combination list in which each of the at least one candidate band combination is located, and an index or a sequence number (BC index) of the band combination in the corresponding band combination list. For example, the band combination list A is identified by A, and includes 10 band combinations whose identifiers are 1 to 10, the band combination list B is identified by B, and includes 12 band combinations whose identifiers are 1 to 12. If the band combination information indicates only an identifier of a band combination, for example, 8, the band combination with the identifier 8 exists in both the band combination lists. When the first indication information indicates the identifier A and the identifier 8, the band combination whose identifier is 8 in the band combination list A may be uniquely indicated.

In a second implementation, each band combination may correspond to one band combination index (BC index), and the first information may indicate a band combination index of the first band combination.

In a third implementation, if the terminal device receives the band combination information, the first information may indicate an index of the first band combination in the at least one candidate band combination indicated by the band combination information. In this case, the index of the first band combination may be a location sequence number of the first band combination in the at least one indicated candidate band combination. For example, the at least one candidate band combination includes a BC 1 and a BC 2. If the first band combination is the BC 2, the index of the first band combination may be 2.

In this implementation, the first information may further indicate a BC list in which the BC list corresponding to the first band combination is located. For details, refer to the foregoing descriptions.

In an implementation, the first information may indicate a frequency band number (frequency band number) of the first band, or the first information indicates a band entry index (band entry index) of the first band in the first band combination.

For example, the first band combination includes two bands, and frequency band numbers are n3 and n41 respectively. If the frequency band number of the first band is n3, the first information may include n3.

For example, if the band entry index of the first band in the first band combination is 1, and a parent of the band entry index of the first band included in the first indication information is 1.

In this application, the first band combination indicated by the first information may alternatively be a fallback band combination of another band combination. The following describes how the first information indicates a fallback band combination.

In an implementation, the first band combination indicated by the first information is a fallback band combination of one of the at least one band combination supported by the terminal device, or the first band combination indicated by the first information is a fallback band combination of one of the at least one candidate band combination indicated by the band combination information.

In this implementation, there are the following two manners in which the first information indicates the first band combination.

Manner 1: The first information indicates all bands included in the first band combination. For example, the first information indicates frequency band numbers of all bands included in the first band combination. For example, the first information indicates that the first band combination is n3+n41, that is, the first band combination is a BC including a band n3 and a band n41, where n3 and n41 are frequency band numbers.

Optionally, the first information further indicates a parent BC (parent BC) corresponding to the first band combination. For example, the first band combination includes a band n3 and a band n41, and the parent BC of the first band combination may include the band n3, the band n41, and a band n78. A possible manner of indicating the parent BC is: indicating a BC index of the parent BC, where the parent BC index is an index of a location sequence of the BC in a supported band combination list (supportedBandCombinationList) reported by the terminal device in the first capability information. For example, if the band combination list included in the first capability information includes 100 BCs in total, an index of a BC that is ranked first is 1, an index of a BC that is ranked second is 2, and indexes of other BCs are deduced by analogy. Optionally, because there are a plurality of types of BC lists in the terminal device capability, for example, a BC list for dual connectivity MRDC, a BC list for NR SA, a BC list for uplink antenna switch uplink Tx Switch, and a BC list for a sidelink, the first information may further indicate a BC list in which a parent BC is located.

Manner 2: The first information may alternatively indicate the first band combination by indicating a parent BC (parent BC) of the first band combination and a band entry index supported by the terminal device in the parent BC. For example, if the parent BC of the first band combination includes a band n3, a band n41, and a band n78, and a location in the band combination list included in the first capability information is the 5^{th} bit, a BC index of the parent BC of the first band combination is 5. If the first band combination includes a band n3 and a band n41, band entry indexes of the first band combination are band entries that rank first and second in the parent BC, that is, the band entry indexes are 1 and 2. Therefore, the first information may indicate that a BC index of the parent BC is 5, and indicate that the two band entry indexes are respectively 1 and 2, which may indicate that the first band combination supported by the terminal device includes the band n3 and the band n41. The first information may further indicate a BC list in which the parent BC is located. Details are described above, and are not described herein again.

In a possible manner, if the terminal device receives the candidate serving frequency information, the terminal device uses, only the first band combination indicated by the first information, a band corresponding to the frequency indicated by the candidate serving frequency information in a current PCell, as a fallback BC of a candidate SCell. For example, bands corresponding to the one or more frequencies indicated by the candidate serving frequency information include a band B, a band C, and a band D, and a PCell currently accessed by the terminal device corresponds to a band A. The first band combination indicated by the first information may be a band combination including band A+band B, or a band combination including band A+band C. However, the terminal device does not indicate, by using the first information, a band combination including band C+band D, because band C+band D do not include the band A of the PCell currently accessed by the terminal device.

In a possible manner, when the first band combination is a fallback band combination of another band combination, the first information further indicates a fallback capability that is in the first band combination in the capability restriction case and that is supported by the terminal device, where the fallback capability includes a fallback perFS capability and/or a fallback FSperCC capability, for example, a capability of a MIMO layer quantity, a capability of a CC quantity, and a capability of CC bandwidth. The fallback perFS capability or the fallback FSperCC capability is lower than a perFS capability or an FSperCC capability reported for a same band in a parent BC that is of the first band combination and that is reported in the first capability information of the terminal device. For example, the parent BC of the first band combination includes n3+n41+n78, where n3 supports two CCs, each CC supports four MIMO, n41 supports one CC, and the CC supports four MIMO; and the first band combination includes n3+n41. In this case, the first information may indicate that n3 of the terminal device in the first band combination supports one CC, and the CC supports four MIMO; and n41 of the terminal device in the first band combination supports one CC, and the CC supports two MIMO. Optionally, if the first information does not indicate the fallback capability of the first band combination supported by the terminal device, the fallback capability of the first band combination is the same as a capability of a same band in a parent BC of the first band combination. For example, in the foregoing example, n3 of the terminal device in the first band combination still supports two CCs and four MIMO, and n41 of the first band combination still supports one CC and four MIMO.

In another implementation, the first information may further indicate a BC that is not supported by the terminal device when the terminal device is in the capability restriction case. The BC that is not supported by the terminal device is one BC in the at least one band combination indicated by the first capability information of the terminal device, or one BC in the at least one candidate band combination indicated by the band combination information.

In a manner, the first information indicates a BC index of a BC that is not supported by the terminal device.

It is assumed that the first information indicates that the BC that is not supported by the terminal device is a third band. A fallback BC of the third band should not be considered as the BC that is not supported by the terminal device. Alternatively, it may be understood as that the terminal device may still support the fallback BC of the third band.

For example, if the first information indicates that a BC #1 that is not supported by the terminal device includes a band A, a band B, and a band C, it does not indicate that the terminal device does not support any one of the following fallback BCs of the BC #1:
a fallback BC including the band A and the band B; a fallback BC including the band B and the band C; a fallback BC including the band A and the band C; the band A; the band B; and the band C.

In a manner, if the first information does not indicate that the terminal device does not support a fallback BC of a third band, it indicates that the terminal device supports all fallback BCs of the third band, regardless of whether the fallback BCs include a band in which the PCell is currently located.

In a manner, if the first information does not indicate that the terminal device does not support a fallback BC of a third band, it indicates that the terminal device supports a fallback BC that is in the fallback BC of the third band and that includes only a band in which the PCell is currently located. With reference to the foregoing example, it is assumed that in the foregoing example, the band in which the PCell is currently located is the band A, the first information indicates that the BC #1 that is not supported by the terminal device includes the band A, the band B, and the band C, but the first information does not indicate that the terminal device does not support a fallback BC of the BC #1. In this case, it may be considered that the fallback BC of the BC #1 that is supported by the terminal device includes band A+band B, band A+band C, and the band A, and whether the terminal device supports the following fallback BC of the BC #1 cannot be indicated: band B+band C, the band B, and the band C. This is because the band of the PCell is not included.

A capability of a band (for example, the band A or the band B) included in the fallback BC of the third band that is supported by the terminal device is the same as a capability of a same band in a parent BC (that is, the third band) reported in the first capability information of the terminal device (for example, same as capabilities of the band A and the band B in band A+band B+band C). The capability herein may include a perBC capability, or may include a perFS capability and an FSperCC capability.

In a possible manner, when the first information indicates a BC that is not supported by the terminal device, the BC indicated by the first information includes a band corresponding to the current PCell. For example, the band of the PCell previously accessed by the terminal device is the band A, and the BC indicated by the first information may include band A+band B+band C. However, the terminal device does not indicate, by using the first information, that the terminal device does not support a band combination including band C+band D, because the band combination does not include the band of the PCell currently accessed by the terminal device.

In a possible manner, when the first information indicates a BC that is not supported by the terminal device, all bands included in the BC indicated by the first information are located in the one or more bands corresponding to the frequencies indicated by the candidate serving frequency information.

In a possible manner, because the first capability information of the terminal device may change, for example, the capability of the terminal device is updated due to a software upgrade, a hardware fault, or another reason of the terminal device, the terminal device may re-trigger a terminal device capability enquiry and reporting procedure through mobility registration update, and update the terminal device capability information stored in the network device and a core network. In a possible scenario, the terminal device moves to another target network device after a mobility registration capability update occurs on a source network device, but the target network device does not obtain updated terminal device capability information in a timely manner. In this case, the terminal device capability information stored on the target network device may be inconsistent with that stored on a terminal device side. If a BC list indicated by the terminal device capability information in the terminal device is inconsistent with a BC included in a BC list indicated by the terminal device capability information included in the network device, the terminal device and the network device determine different BCs based on BC indexes. In a possible solution, the terminal device includes an identifier in the terminal device capability information, to indicate a version of the terminal device capability information reported this time or a version of a BC list in the terminal device capability information. For example, an identifier of the terminal device capability information reported by the terminal device for the first time (initially reported) is #0, and an identifier of terminal device capability information reported by the terminal device after a capability change changes to #1. When the terminal device indicates the BC index of the first band combination by using the first information, the terminal device further indicates the identifier of the terminal device capability information. When determining that an identifier (also #1) in currently stored terminal device capability information is the same as the identifier in the terminal device capability information indicated by the first information, the network device determines, based on the BC index and in a BC list in the terminal device capability information stored on the network device side, a BC whose capability changes. If the network device determines that the identifier in the currently stored terminal device capability information is different from the identifier in the terminal device capability information indicated by the first information, when receiving the first information, the network device cannot determine, based on the terminal device capability information currently stored on the network device side, a specific BC whose capability changes. In a possible implementation of the network device, the network device queries the core network for the capability of the terminal device or re-triggers a capability query from the terminal device, to re-obtain terminal device capability information, to determine, based on the first information, a specific BC whose capability changes in a BC list in the terminal device capability information.

In this embodiment, when a temporarily restricted capability of the terminal device changes, the terminal device may report the first information again.

Step 805: The network device schedules a resource for the terminal device based on the first information.

The network device determines, based on the first information, to schedule a resource for the terminal device based on the capability in the first band in the first band combination. For example, the network device may perform RRC configuration or reconfiguration on the terminal device based on the capability in the first band in the first band combination, where the RRC configuration or reconfiguration does not exceed the capability in the first band in the first band combination. The network device communicates with the terminal device based on a radio resource indicated by the RRC configuration or reconfiguration.

Step 805 is an optional step, and the network device may schedule a resource for the terminal device based on an actual requirement.

According to the foregoing method, the terminal device indicates, by using the first information, the capability of the terminal device in the first band in the first band combination in the capability restriction case, so that a network device can learn, in a timely manner, that a capability of the terminal device changes. After receiving the first information, the network device may perform configuration and scheduling based on the restricted capability, thereby improving resource utilization and enhancing system performance. Further, in this application, when the terminal device sends the first information or the second information, the terminal device does not need to disconnect an RRC connection from the network, but sends the first information or the second information in an RRC connected state or in an RRC connection establishment process. This is a dynamic indication, and an ongoing service is not interrupted. Therefore, user experience is not affected.

Further, the first information indicates the BC index of the first band combination and the band entry index of the first band, so that signaling overheads of the first information can be reduced. The first information indicates only the band combination including the band of the PCell, so that complexity of implementation of the terminal device and signaling overheads of reporting the first information by the terminal device can be reduced.

In this application, step 803a or step 803a may also be replaced with step 901 in the following procedure, and step 804 may also be replaced with step 902 in the following procedure. Details are described below.

In this embodiment of this application, the terminal device may alternatively indicate temporary capability suppression cancellation to the network device. For example, the terminal device sends x^{th} information to the network device, to indicate that temporary capability suppression is canceled, or the terminal device exits a capability suppression state. In this case, the capability supported by the terminal device is the same as a capability reported to the network in the terminal device capability information (UECapabilityInformation). In a possible implementation, if a UAI message sent by the terminal device to the network device does not include any field, that is, empty UAI, it indicates that temporary capability suppression of the terminal device is cancelled. For example, when the UAI does not include a capability of a band, a cell, or a band combination with a capability restriction, it indicates that a current band combination capability of the terminal device, or CA and DC capabilities are not restricted. For example, when the UAI does not include a MIMO layer quantity, it indicates that a MIMO layer quantity currently supported by the terminal device is not restricted, and the MIMO layer quantity may correspond to a specific carrier or a specific cell.

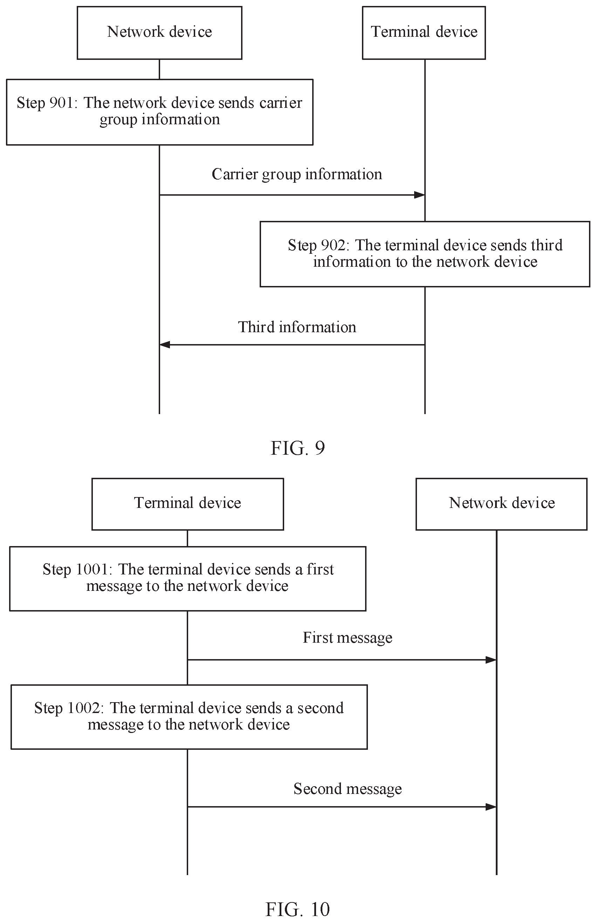

FIG. 9 is a schematic flowchart of a communication method according to an embodiment of this application. The method includes the following steps.

Step 901: A network device sends carrier group information.

Correspondingly, a terminal device receives the carrier group information, where the carrier group information indicates at least one carrier group, and a carrier in the at least one carrier group is a carrier on which a candidate serving cell is located.

In an implementation, the carrier group information further indicates at least one of the following:
frequency information of each carrier in each carrier group in the at least one carrier group;
a MIMO configuration of each carrier in each carrier group in the at least one carrier group; and
a measurement configuration of each carrier in each carrier group in the at least one carrier group.

Step 902: The terminal device sends third information to the network device.

Correspondingly, the network device receives the third information. The third information indicates a capability of a terminal device on a first carrier in a first carrier group in a capability restriction case, where the first carrier group belongs to the at least one carrier group supported by the terminal device, and the capability that is on the first carrier in the first carrier group and that is indicated by the third information is lower than a capability that is on the first carrier in the first carrier group and that is indicated by first capability information. The first capability information is capability information reported to a network before the third information is sent, and the first capability information indicates a capability of the at least one carrier group supported by the terminal device.

The third information may further indicate that the terminal device supports the first carrier in the first carrier group in the capability restriction case and at least one capability parameter of the first carrier in the first carrier group. The at least one capability parameter is a different capability parameter in a capability parameter that corresponds to the first carrier in the first carrier group and that is indicated by the first capability information.

The third information may further indicate the first carrier group and the first carrier. For example, the third information includes an index of the first carrier group and an index of a location of the first carrier in the first carrier group.

In an implementation, if the terminal device receives the carrier group information, the third information indicates an index of the first carrier group in the at least one carrier group indicated by the carrier group information.

According to the foregoing method, the terminal device indicates, by using the third information, the capability of the terminal device in the first carrier in the first carrier group in the capability restriction case, so that a network device can learn, in a timely manner, that a capability of the terminal device changes. After receiving the third information, the network device may perform configuration and scheduling based on a restricted capability, thereby improving resource utilization and enhancing system performance.

This application further provides a method, to improve network security. Details are described below.

FIG. 10 is a schematic flowchart of a communication method according to an embodiment of this application. The method includes the following steps.

Step 1001: A terminal device sends a first message to a network device.

Correspondingly, the network device receives the first message. The first message includes capability restriction indication information, and the capability restriction indication information indicates that the terminal device is capability restricted, the terminal device is in a capability restriction state, the terminal device is to be in a capability restriction state, or the terminal device is in or is to be in a dual-SIM dual active state. The capability restriction may be replaced with a temporary capability restriction, a temporary capability limitation, or a temporary capability change.

In this application, for a specific meaning of the capability restriction, refer to the descriptions in step 801.

That the terminal device is capability restricted indicates that a current capability of the terminal device changes or a capability of the terminal device is about to change. A changed capability of the terminal device is less than a capability indicated by the terminal device by using first capability information. The first capability information is capability information reported to a network before the first message is sent. For example, the first capability information is capability information reported by the terminal device when the terminal device initially accesses the network. For details, refer to the descriptions in step 803a.

In an implementation, as shown in FIG. 6, a SIM-1 of a terminal device is in an RRC connected state in a network A to receive and send data, and a SIM-2 of the terminal device is in an RRC non-connected state (for example, an RRC idle state or an RRC inactive state) in a network B. If the SIM-2 of the terminal device has a downlink or uplink service that arrives on the network B and is ready to enter an RRC connected state, because the SIM-2 is to occupy a part of resources of the terminal device, the terminal device may send the capability restriction indication information to the network A.

In an implementation, as shown in FIG. 7, if the SIM-2 of the terminal device has performed a service in the RRC connected state, the SIM-1 of the terminal device is in the RRC non-connected state in the network A. If the SIM-1 of the terminal device has a downlink or uplink service that arrives and is ready to enter the RRC connected state, because the SIM-2 has occupied a part of resources, the SIM-1 cannot use all capabilities to communicate on the network A. In this case, in a process in which the SIM-1 enters or restores from the RRC non-connected state (for example, the RRC idle state or the RRC inactive state) to the RRC connected state, the terminal device may send the capability restriction indication information to the network A.

In an implementation, the first message is an unencrypted message. The first message is a message sent before key agreement is performed between the terminal device and the network device. For example, the first message is an RRC connection establishment request message or an RRC establishment complete message. The first message is a message 3 (msg3) in a random access process.

In an implementation, the capability restriction indication information indicates that the terminal device is in a dual-SIM dual active state, or a dual-SIM dual active (dual active) state, or that the capability of the terminal device is temporarily suppressed. After receiving the capability restriction indication information sent by the terminal device, the network device may schedule the terminal device in a conservative scheduling manner. For example, CA/DC is not configured, and a downlink signal is not sent through multi-layer MIMO.

In an implementation, the capability restriction indication information further indicates at least one of the following:
supporting only a basic capability, where the basic capability is a mandatory capability of incapability signaling;
not supporting carrier aggregation or dual connectivity; and
not supporting multi-layer multiple-input multiple-output MIMO.

The basic capability may be a mandatory capability of the incapability signaling, that is, a capability that does not need to be reported by the terminal device. After receiving the capability restriction indication information sent by the terminal device, the network device may schedule the terminal device by using a basic capability set. For example, CA/DC is not configured, and a downlink signal is not sent through multi-layer MIMO.

In an implementation, the capability restriction indication information includes 1 bit. When a value of the bit is a first value, it indicates that the capability of the terminal device is restricted.

Step 1002: The terminal device sends a second message to the network device.

Correspondingly, the network device receives the second message.

Before the terminal device sends the second message, an access stratum security activation procedure is performed between the terminal device and the network device. Specific steps of the procedure are not limited in this application. Details are not described herein.

In an implementation, the second message is an encrypted message. For example, the second message is an RRC reconfiguration complete (RRCReconfigurationcomplete) message. Alternatively, the second message is UE assistance information (UE assistance information).

In an implementation, before sending the second message, the terminal device receives an RRC reconfiguration (RRCReconfiguration) message from the network device. The RRC reconfiguration message is for configuring an RRC connection, including a radio resource configuration (including a radio bearer configuration, a MAC layer configuration, and a physical channel configuration), a mobility-related configuration, a measurement configuration, and the like.

Implementation 1: If the terminal device is still capability restricted, the second message includes first indication information, where the first indication information indicates that the terminal device is still capability restricted, or the first indication information is for determining that the terminal device is currently in a capability restriction state.

In this implementation, if the first indication information is absent, that is, the first indication information is not sent, it indicates that a current capability of the terminal device is the same as a capability corresponding to terminal device capability information, or the terminal device is not in the capability restriction state. For example, the first indication information is 1 bit. Presence of the bit indicates that capability restriction is acknowledged, and absence of the bit indicates that there is no capability restriction case. Alternatively, when the bit is set to 1, it indicates that capability restriction is acknowledged; and when the bit is set to 0, it indicates that no capability restriction occurs.

In this implementation, if the capability of the terminal device is not restricted, the second message does not include the first indication information, or the second message includes third indication information, where the third indication information indicates that the capability is not restricted.

In the implementation 1, the network cannot distinguish whether the terminal device actually supports only the basic capability set or supports a capability higher than the basic capability set. Therefore, a possible implementation of the network is not limited. For example, the network may configure and schedule the terminal device based on the basic capability set (for example, CA/DC not configured). When the network has a high data traffic requirement, the network may also configure CA/DC, and then the terminal device passively requests a capability restriction based on a configuration delivered by the network, for example, requests to release an SCell or an SCG. Alternatively, if the terminal device capability information indicates that the terminal device supports proactive reporting, the network may deliver a filtering condition to proactively query a restricted capability with reference to the procedure in FIG. 8 or FIG. 9. For example, the network device performs step 803a, step 803b, or step 901, and correspondingly, the terminal device performs step 804 or step 902. For details, refer to the foregoing descriptions. Details are not described herein again.

Implementation 1: If the terminal device is still capability restricted and supports only basic capability information, the second message includes first indication information, where the first indication information indicates that the terminal device is still capability restricted and supports only a basic capability.

If the terminal device is still capability restricted and a supported third capability is greater than a first capability and less than a second capability, the second message includes second indication information. The second indication information indicates that the capability is still restricted, and indicates that a supported restricted capability is greater than the basic capability and less than the first capability, where the first capability is a capability indicated by the first capability information.

In this implementation, if the capability of the terminal device is not restricted, the second message does not include the first indication information or the second indication information, or the second message includes the third indication information, where the third indication information indicates that the capability is not restricted.

In the implementation 2, the terminal device may indicate, to the network by using the second indication information, whether the terminal device supports a higher capability. If that the terminal device supports proactive reporting of a temporary restricted capability is reported in the terminal device capability, the network may determine, based on the information and the terminal device capability indicating that the terminal device supports proactive reporting of a capability restriction, whether to send a candidate frequency/CA configuration. In this case, the second indication information may replace the second information in the procedure in FIG. 8, to trigger the network to request, as required, the terminal device to proactively report a restricted capability. If the terminal device capability information indicates that the terminal device does not support proactive reporting of the temporary restricted capability, the network may also configure CA/DC on demand based on the information configuration (for example, configure CA/DC when the network has a high data traffic requirement). In this case, the terminal device may request or indicate the temporary capability restriction in a passive manner, for example, request to release an SCell or an SCG.

Implementation 3: The second message indicates a restricted capability of the terminal device. The second message may be UE assistance information. Before sending the second message, the terminal device receives fourth information from the network device, where the fourth information indicates that the UE is allowed to send the UE assistance information that is for a plurality of SIMs. The fourth information may be carried in the RRC reconfiguration message. The second message indicates a restricted capability of the terminal device, for example, a restricted carrier, a restricted MIMO layer quantity, a restricted measurement capability, or restricted carrier bandwidth. In this implementation, if the network device does not receive the second message after sending the fourth information, it indicates that a current capability of the terminal device is the same as a capability corresponding to the terminal device capability information, or the terminal device is not in the capability restriction state.

According to the method provided in this application, because the first message is unencrypted signaling, the first indication information or the second indication information may be transmitted in the encrypted second message, to determine whether the terminal device is capability restricted, to prevent an attacker (for example, a fake base station, where the fake base station may also be referred to as a fake network device) from sending a false first message, thereby damaging system performance.

For example, currently, the terminal device is not in a dual-SIM dual active state, and the first message does not indicate a capability restriction. However, the fake base station tampers with the first message to indicate that a capability restriction occurs. The tampered first message received by the network device includes indication information, and the network device performs configuration and scheduling based on a restricted capability, for example, not configuring CA/DC, and not scheduling MIMO. This significantly reduces a transmission rate. However, according to the method in this application, network security can be improved.

For another example, currently, the terminal device is actually in a dual-SIM dual active state, and the first message indicates a capability restriction, but indicates, after being tampered with by the fake base station, that the terminal device is not capability restricted. As a result, the network device configures and schedules the terminal device based on a capability (a maximum capability, which is higher than a current actual capability of the terminal device) initially reported by the terminal device, for example, configuring CA or scheduling multi-layer MIMO. In this case, because an actual available capability of the terminal device is less than a maximum capability initially reported in the terminal device capability information, the terminal device cannot correctly receive signaling and/or data sent by the network, causing a bit error and a packet loss.

For a network side, before receiving the second message, the network side uses the capability restriction indication information received in the first message. To be specific, if the capability restriction indication information is received, the network side configures and schedules the terminal device based on the basic capability set. After receiving the second message, the network side uses the first indication information in the second message. If the first indication information is absent, it is considered that no temporary capability restriction occurs on the terminal device; and if the second indication information is received, it is considered that the capability of the terminal device is greater than the basic capability and less than the maximum capability.

In the following scenario: currently, the terminal device is not capability restricted, and the first message does not indicate the capability restriction, but indicates, after being tampered with by the fake base station, that the capability restriction occurs on the terminal device. In this case, the RRC reconfiguration message sent by the network device configures the terminal device based on the basic capability set, and the terminal device may support higher configuration and scheduling. Therefore, this embodiment provides another solution for this scenario, to improve network security. Details are described below.

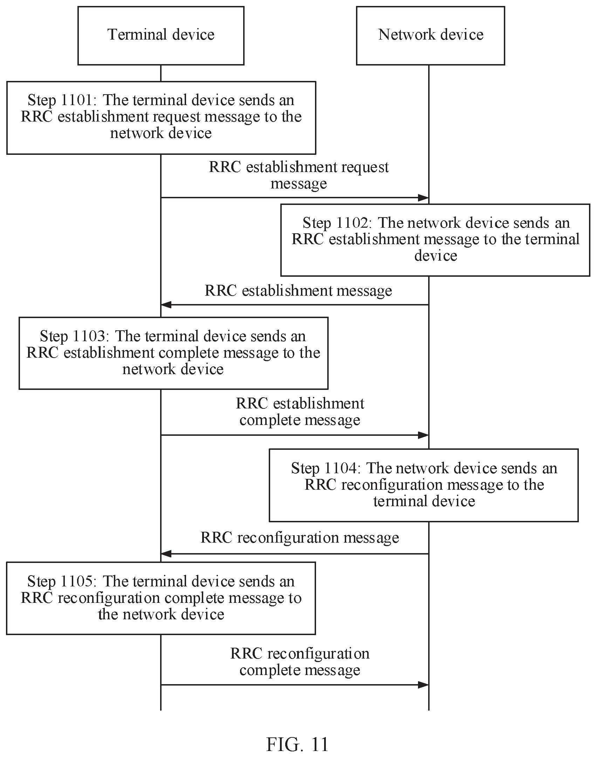

FIG. 11 is a schematic flowchart of a communication method according to an embodiment of this application. The method includes the following steps.

Step 1101: A terminal device sends an RRC establishment request message to a network device.

Correspondingly, the network device receives the RRC establishment request message.

Step 1102: The network device sends an RRC establishment message to the terminal device.

Correspondingly, the terminal device receives the RRC establishment message.

Step 1103: The terminal device sends an RRC establishment complete message to the network device.

Correspondingly, the network device receives the RRC establishment complete message.

An access stratum security activation procedure is performed between the terminal device and the network device. Specific steps of the procedure are not limited in this application. Details are not described herein. After step 1103, a message between the terminal device and the network device is an encrypted message.

In an implementation, in a capability restriction case, a first message includes capability restriction indication information, where the capability restriction indication information indicates a capability restriction and that only a basic capability is supported. For specific content of the capability restriction indication information, refer to the descriptions in step 1001. Details are not described herein again.

In an implementation, the first message is an unencrypted message. The first message is a message sent before key agreement is performed between the terminal device and the network device. For example, the first message is an RRC connection establishment request message or an RRC establishment complete message. Alternatively, the first message is a message 3 (msg3) in a random access process. For specific content of the first message, further refer to the descriptions in step 1001. Details are not described herein again.

Step 1104: The network device sends an RRC reconfiguration message to the terminal device.

Correspondingly, the terminal device receives the RRC reconfiguration message.

Step 1105: The terminal device sends an RRC reconfiguration complete message to the network device.

Correspondingly, the network device receives the RRC reconfiguration complete message.

### Solution 1:

If first capability information indicates that the terminal device supports proactive capability restriction reporting, and the RRC reconfiguration message sent by the base station includes fifth information, when the network device does not receive, within specific duration after receiving the RRC reconfiguration complete message (or after the network device sends the RRC reconfiguration message), first information or the capability restriction indication information sent by the terminal device, the network device considers that a current capability of the terminal device is the same as a capability reported in the first capability information, or it is understood as that the terminal device is not in a capability restriction state or a dual-SIM dual active state. The fifth information may indicate that the terminal is allowed to send capability restriction information. The capability restriction information herein may include at least one of the following: a restricted carrier, a restricted band, a restricted MIMO layer quantity, or a restricted measurement capability. In a possible implementation, the fifth information may be 1 bit, to indicate whether the terminal device is allowed to send at least one of the foregoing restricted capabilities. In another possible implementation, the fifth information may be a plurality of bits, respectively indicating whether the terminal device is allowed to send a restricted carrier, whether the terminal device is allowed to send a restricted band, whether the terminal device is allowed to send a restricted MIMO layer quantity, and whether the device is allowed to send a restricted measurement capability. In other words, the foregoing different capability parameters may be controlled by using different control fields. The fifth information may also be candidate serving frequency information or band combination information. For details, refer to the descriptions in the procedure in FIG. 8.

In a possible implementation, after receiving the RRC reconfiguration complete message or sending the RRC reconfiguration message, the network device starts a first timer. If the network device does not receive, within timing duration of the first timer, the first information or the capability restriction indication information sent by the terminal device, after the first timer expires, the network device may determine that the terminal device supports a maximum capability, or the terminal device is not in the capability restriction state. For specific meanings of the first capability information, the first information, and the capability restriction indication information, refer to the foregoing descriptions. Details are not described herein again. The timing duration of the first timer may be predefined, or may be set by the network device. This is not limited in this application.

### Solution 2:

If first capability information indicates that the terminal device supports proactive capability restriction reporting, and the RRC reconfiguration message sent by the network device includes fifth information, and if the terminal device is currently not in a dual-SIM dual active state or is not capability restricted, after receiving the RRC reconfiguration message, the terminal device sends empty RRC signaling, third indication information, or a third message that indicates a capability restriction caused by dual-SIM. To be specific, the RRC signaling does not include any field indicating restriction capability information, the third indication information indicates that supported capability information is the first capability information or the third indication information indicates a capability corresponding to the first capability information supported by the terminal device, and the third message does not include the capability restriction information. The RRC signaling may be terminal device assistance information (UE assistance information, UAI). The network device may determine, based on the RRC signaling, the third indication information, or the third message, that the terminal device supports a maximum capability, or the terminal device is not in the capability restriction state.

In this application, when the capability of the terminal device is not restricted, the network device can also determine a current actual capability state of the terminal device by using a timer that expires or empty UAI sent by the terminal device. This avoids a case in which when the capability of the terminal device is not restricted, the network device mistakenly considers, based on a message of a fake network device, that the terminal device supports only a basic capability set.

According to the method provided in this application, if the terminal device supports proactive reporting of a restricted capability, and the network device allows the terminal device to proactively report the restricted capability, if the network device does not receive, within specific duration, the UAI or the third indication information sent by the terminal device, or receives the empty UAI or the third indication information sent by the terminal device, it indicates that a capability currently supported by the terminal device is a full capability that is the same as a capability reported in terminal device capability information, and no temporary capability restriction occurs on the terminal device. In this way, the network device can accurately determine the capability supported by the terminal device, thereby improving system security.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

This application further provides a communication apparatus. The communication apparatus may be configured to implement functions of the terminal device or the network device in the foregoing method embodiments, and therefore can also implement beneficial effects of the foregoing method embodiments. In embodiments of this application, the communication apparatus may be one of the terminals 120a to 120j shown in FIG. 1, may be the network device 110a or 110b shown in FIG. 1, or may be a module (for example, a chip) used in the terminal device or the network device.

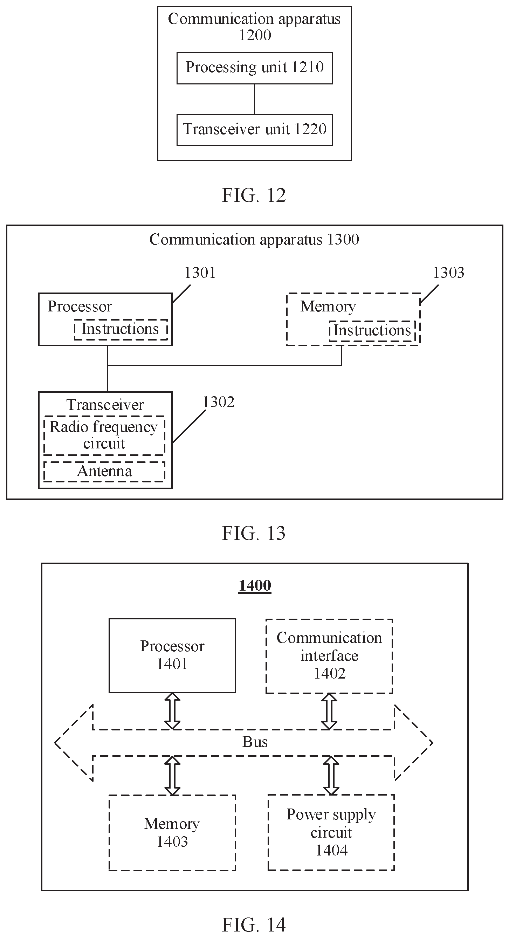

As shown in FIG. 12, a communication apparatus 1200 includes a processing unit 1210 and a transceiver unit 1220. The communication apparatus 1200 is configured to implement the functions of the terminal device or the network device in the method embodiments shown in FIG. 8 to FIG. 11.

When the communication apparatus 1200 is configured to implement the functions of the terminal device:

The processing unit is configured to receive control information via the transceiver unit, where the control information indicates that reporting of first information is allowed, and the control information is from a network device.

The processing unit is configured to send the first information via the transceiver unit, where the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

When the communication apparatus 1200 is configured to implement the functions of the network device:

The processing unit is configured to: send control information via the transceiver unit, where the control information indicates that reporting of first information is allowed; and
receive the first information, where the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

When the communication apparatus 1200 is configured to implement the functions of the terminal device:
The processing unit is configured to send a first message to a network device via the transceiver unit, where the first message includes capability restriction indication information, the capability restriction indication information indicates that a capability of the terminal device is restricted, and the first message is an unencrypted message.

The processing unit is configured to send a second message to the network device via the transceiver unit, where the second message is an encrypted message, and if the terminal device is still capability restricted, the second message includes first indication information, where the first indication information indicates that the terminal device is still capability restricted.

When the communication apparatus 1200 is configured to implement the functions of the network device:
The processing unit is configured to receive a first message from a terminal device via the transceiver unit, where the first message includes capability restriction indication information, the capability restriction indication information indicates that a capability of the terminal device is restricted, and the first message is a message in a radio resource control RRC connection establishment process.

The processing unit is configured to receive a second message from the terminal device via the transceiver unit.

The second message includes first indication information, where the first indication information indicates that the capability is still restricted.

When the communication apparatus 1200 is configured to implement the functions of the terminal device:
The processing unit is configured to send a first message to a network device via the transceiver unit, where in a capability restriction case, the first message includes capability restriction indication information, and the capability restriction indication information indicates that a capability is restricted and only a basic capability is supported.

The processing unit is configured to send a second message to the network device via the transceiver unit. If the capability is still restricted and only basic capability information is supported, the second message includes first indication information, where the first indication information indicates that the capability is still restricted and only the basic capability is supported. If the capability is still restricted and a supported third capability is greater than a first capability and less than a second capability, the second message includes second indication information, where the second indication information indicates that the capability is still restricted, and indicates that a supported restricted capability is greater than the basic capability and less than the first capability.

The first capability is a capability indicated by first capability information, the first capability information is capability information reported to a network before the first message is sent, the first message is an unencrypted message, and the second message is an encrypted message.

In an implementation, the first message is a radio resource control RRC connection establishment request message or an RRC establishment complete message.

In an implementation, the second message is an RRC reconfiguration complete message.

When the communication apparatus 1200 is configured to implement the functions of the network device:

The processing unit is configured to receive a first message from a terminal device via the transceiver unit, where the first message includes capability restriction indication information, and the capability restriction indication information indicates that the terminal device is capability restricted and supports only a basic capability.

The processing unit is configured to receive a second message from the terminal device via the transceiver unit, where the second message includes first indication information or second indication information. The first indication information indicates that the terminal device is still capability restricted and supports only the basic capability, and the second indication information indicates that the terminal device is still capability restricted and indicates that a supported restricted capability is greater than the basic capability and less than a first capability. The first capability is a capability indicated by the first capability information, the first message is an unencrypted message, and the second message is an encrypted message. The first capability information is capability information that is reported by the terminal device to a network before the first message is received.

When the communication apparatus 1200 is configured to implement the functions of the network device:
The processing unit is configured to send an RRC reconfiguration message to a terminal device via the transceiver unit.

The processing unit is configured to: receive an RRC reconfiguration complete message via the transceiver unit; and if first capability information of the terminal device indicates that the terminal device supports proactive reporting of a restricted capability, and no capability restriction indication information from the terminal device is received within preset duration, determine that the terminal device is not restricted.

When the communication apparatus 1200 is configured to implement the functions of the terminal device:
The processing unit is configured to receive an RRC reconfiguration message via the transceiver unit.

The processing unit is configured to: send an RRC reconfiguration complete message to a network device via the transceiver unit; and send a third message if first capability information indicates that reporting of a capability restriction is supported and a capability is not restricted, where the third message does not include information indicating the capability restriction, or the third message includes third indication information, where the third indication information indicates that supported capability information is the first capability information, and the first capability information is capability information reported to a network before the configuration information is received.

When the communication apparatus 1200 is configured to implement the functions of the network device:
The processing unit is configured to send an RRC reconfiguration message to a terminal device via the transceiver unit.

The processing unit is configured to: receive an RRC reconfiguration complete message via the transceiver unit; and receive a third message from the terminal device, where the third message does not include information indicating a capability restriction, or the third message includes third indication information, where the third indication information indicates that supported capability information is first capability information, and the first capability information is capability information that is from the terminal device before the RRC reconfiguration complete message is received.

For more detailed descriptions of the processing unit 1210 and the transceiver unit 1220, directly refer to the related descriptions in the method embodiments shown in the foregoing procedures. Details are not described herein again.

In another possible product form, the terminal device or the network device in embodiments of this application may be implemented by using a general bus architecture. For ease of description, refer to FIG. 13. FIG. 13 is a diagram of a structure of a communication apparatus 1300 according to an embodiment of this application. The communication apparatus 1300 includes a processor 1301 and a transceiver 1302. The communication apparatus 1300 may be a terminal device, or a chip or a chip system in the terminal device; or the communication apparatus 1300 may be a network device, or a chip or a module in the network device. FIG. 13 shows only main components of the communication apparatus 1300. In addition to the processor 1301 and the transceiver 1302, the communication apparatus 1300 may further include a memory 1303 and an input/output apparatus (not shown in the figure).

Optionally, the processor 1301 is mainly configured to: process a communication protocol and communication data, control the entire communication apparatus, execute a software program, and process data of the software program. The memory 1303 is mainly configured to store a software program and data. The transceiver 1302 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1301, the transceiver 1302, and the memory 1303 may be connected through a communication bus.

After the communication apparatus is powered on, the processor 1301 may read the software program from the memory 1303, interpret and execute instructions of the software program, and process the data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends the radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 1200 may be in a form of the communication apparatus 1300 shown in FIG. 13.

In an example, a function/implementation process of the processing unit 1210 in FIG. 12 may be implemented by the processor 1301 in the communication apparatus 1300 shown in FIG. 13 by invoking the computer-executable instructions stored in the memory 1303. A function/implementation process of the transceiver unit 1220 in FIG. 12 may be implemented through the transceiver 1302 in the communication apparatus 1300 shown in FIG. 13.

In another possible product form, the terminal device or the network device in this application may use a composition structure shown in FIG. 14, or include components shown in FIG. 14. FIG. 14 is a diagram of composition of a communication apparatus 1400 according to this application.

As shown in FIG. 14, the communication apparatus 1400 includes at least one processor 1401. Optionally, the communication apparatus further includes a communication interface 1402.

When related program instructions are executed in the at least one processor 1401, the apparatus 1400 may be enabled to implement the method provided in any one of the foregoing embodiments and any possible design of the method. Alternatively, the processor 1401 is configured to implement, by using a logic circuit or executing code instructions, the method provided in any one of the foregoing embodiments and any possible design of the method.

The communication interface 1402 may be configured to receive program instructions and transmit the program instructions to the processor. Alternatively, the communication interface 1402 may be configured to perform communication interaction between the communication apparatus 1400 and another communication device, for example, exchange control signaling and/or service data. For example, the communication interface 1402 may be configured to receive a signal from an apparatus other than the communication apparatus 1400, and transmit the signal to the processor 1401, or send a signal from the processor 1401 to a communication apparatus other than the communication apparatus 1400.

Optionally, the communication interface 1402 may be a code and/or data read/write interface circuit, or the communication interface 1402 may be a signal transmission interface circuit between a communication processor and a transceiver, or may be a pin of a chip.

Optionally, the communication apparatus 1400 may further include at least one memory 1403, and the memory 1403 may be configured to store the related program instructions and/or data that are required. It should be noted that the memory 1403 may be independent of the processor 1401, or may be integrated with the processor 1401. The memory 1403 may be located inside the communication apparatus 1400, or may be located outside the communication apparatus 1400. This is not limited.

Optionally, the communication apparatus 1400 may further include a power supply circuit 1404, and the power supply circuit 1404 may be configured to supply power to the processor 1401. The power supply circuit 1404 may be located in a same chip as the processor 1401, or may be located in a chip other than a chip in which the processor 1401 is located.

Optionally, the communication apparatus 1400 may further include a bus, and parts of the communication apparatus 1400 may be interconnected through the bus.

In some embodiments, in hardware implementation, a person skilled in the art may figure out that the communication apparatus 1200 shown in FIG. 12 may be in a form of the communication apparatus 1400 shown in FIG. 14.

In an example, a function/implementation process of the processing unit 1210 in FIG. 12 may be implemented by the processor 1401 in the communication apparatus 1400 shown in FIG. 14 by invoking the computer-executable instructions stored in the memory 1403. A function/implementation process of the transceiver unit 1220 in FIG. 12 may be implemented through the communication interface 1402 in the communication apparatus 1400 shown in FIG. 14.

It should be noted that the structure shown in FIG. 14 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the network device or the terminal. Certainly, the processor and the storage medium may exist in the network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies in this application.

## Claims

1. A communication method, comprising:
receiving control information, wherein the control information indicates that reporting of first information is allowed, and the control information is from a network device; and
sending the first information, wherein the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

2. The method according to claim 1, wherein the capability restriction case means that a plurality of subscriber identity modules work at the same time, or a resource conflict occurs between a plurality of subscriber identity modules.

3. The method according to claim 1 or 2, wherein the first information further indicates an index of the first band combination in the at least one band combination.

4. The method according to any one of claims 1 to 3, wherein that the first information indicates the capability of the terminal device in the first band in the first band combination in the capability restriction case comprises:
the first information indicates that the terminal device supports the first band in the first band combination in the capability restriction case, and at least one capability parameter of the first band in the first band combination, wherein the at least one capability parameter is a different capability parameter in a capability parameter corresponding to the first band in the first band combination indicated by the first capability information.

5. The method according to any one of claims 1 to 3, wherein that the first information indicates the capability of the terminal device in the first band in the first band combination in the capability restriction case comprises:
the first information indicates that the terminal device does not support the first band in the first band combination in the capability restriction case.

6. The method according to any one of claims 1 to 5, wherein the first band further belongs to a second band combination, and the capability of the terminal device in the first band combination is different from a capability of the terminal device in the first band in the second band combination.

7. The method according to any one of claims 1 to 6, wherein the first band combination further comprises a second band, and the first information further indicates a capability of the terminal device in the second band in the first band combination in the capability restriction case.

8. The method according to any one of claims 1 to 7, wherein the method further comprises:
receiving candidate serving frequency information, wherein the candidate serving frequency information indicates one or more frequencies, each of the one or more frequencies corresponds to one band, and the candidate serving frequency information is from the network device, wherein
each band comprised in the first band combination is a band in one or more bands corresponding to the one or more frequencies.

9. The method according to claim 8, wherein the first band combination comprises a band corresponding to a primary cell, and the band corresponding to the primary cell is a band in the one or more bands.

10. The method according to any one of claims 1 to 7, wherein the method further comprises:
receiving band combination information, wherein the band combination information indicates at least one candidate band combination, and each candidate band combination in the at least one candidate band combination is a band combination of a candidate serving cell, wherein
the first band combination is a band combination in the at least one candidate band combination.

11. The method according to any one of claims 1 to 10, wherein the first information further indicates a frequency band number of the first band; or
the first information further indicates a band entry index of the first band in the first band combination.

12. The method according to any one of claims 1 to 11, wherein the first capability information comprises a first identifier, and the first identifier is for identifying the first capability information.

13. The method according to any one of claims 1 to 12, wherein the method further comprises:
sending second information to the network device, wherein the second information indicates that is capability restricted, is in a capability restriction state, or is to be in a capability restriction state.

14. The method according to claim 13, wherein the second information further indicates at least one of the following:
whether a current network configuration exceeds a capability of the terminal device in the capability restriction case; and
whether a resource conflict occurs between a plurality of subscriber identity modules in the current network configuration.

15. The method according to claim 4, wherein
the at least one capability parameter comprises at least one of the following: a multiple-input multiple-output MIMO layer quantity and component carrier CC bandwidth, and the at least one capability parameter is a capability parameter of a carrier of the first band.

16. A communication method, comprising:
sending control information, wherein the control information indicates that reporting of first information is allowed; and
receiving the first information, wherein the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

17. The method according to claim 16, wherein the capability restriction case means that a plurality of subscriber identity modules work at the same time, or a resource conflict occurs between a plurality of subscriber identity modules.

18. The method according to claim 16 or 17, wherein the first information further indicates an index of the first band combination in the at least one band combination.

19. The method according to any one of claims 16 to 18, wherein that the first information indicates the capability of the terminal device in the first band in the first band combination in the capability restriction case comprises:
the first information indicates that the terminal device supports the first band in the first band combination in the capability restriction case, and at least one capability parameter of the first band in the first band combination, wherein the at least one capability parameter is a different capability parameter in a capability parameter corresponding to the first band in the first band combination indicated by the first capability information.

20. The method according to any one of claims 16 to 18, wherein that the first information indicates the capability of the terminal device in the first band in the first band combination in the capability restriction case comprises:
the first information indicates that the terminal device does not support the first band in the first band combination in the capability restriction case.

21. The method according to any one of claims 16 to 20, wherein the first band further belongs to a second band combination, and the capability of the terminal device in the first band combination is different from a capability of the terminal device in the first band in the second band combination.

22. The method according to any one of claims 16 to 21, wherein the first band combination further comprises a second band, and the first information further indicates a capability of the terminal device in the second band in the first band combination in the capability restriction case.

23. The method according to any one of claims 16 to 22, wherein the method further comprises:
sending candidate serving frequency information, wherein the candidate serving frequency information indicates one or more frequencies, and each of the one or more frequencies corresponds to one band, wherein
each band comprised in the first band combination is a band in one or more bands corresponding to the one or more frequencies.

24. The method according to claim 23, wherein the first band combination comprises a band corresponding to a primary cell, and the band corresponding to the primary cell is a band in the one or more bands.

25. The method according to any one of claims 16 to 24, wherein the method further comprises:
sending band combination information, wherein the band combination information indicates at least one candidate band combination, and each candidate band combination in the at least one candidate band combination is a band combination of a candidate serving cell, wherein
the first band combination is a band combination in the at least one candidate band combination.

26. The method according to claim 19, wherein
the at least one capability parameter comprises at least one of the following: a multiple-input multiple-output MIMO layer quantity and component carrier CC bandwidth, and the at least one capability parameter is a capability parameter of a carrier of the first band.

27. A communication method, comprising:
sending a first message to a network device, wherein the first message comprises capability restriction indication information, the capability restriction indication information indicates that a capability of a terminal device is restricted, and the first message is an unencrypted message; and
sending a second message to the network device, wherein the second message is an encrypted message, and if the terminal device is still capability restricted, the second message comprises first indication information, wherein the first indication information indicates that the terminal device is still capability restricted.

28. A communication method, comprising:
receiving a first message from a terminal device, wherein the first message comprises capability restriction indication information, the capability restriction indication information indicates that a capability of the terminal device is restricted, and the first message is a message in a radio resource control RRC connection establishment process; and
receiving a second message from the terminal device, wherein
the second message comprises first indication information, wherein the first indication information indicates that the capability is still restricted.

29. A communication method, comprising:
sending a radio resource control RRC establishment request message to a network device;
receiving an RRC establishment message from the network device;
sending a first message to the network device, wherein the first message comprises capability restriction indication information, the capability restriction indication information indicates that a terminal device is temporarily capability restricted, and the first message is an RRC establishment complete message;
receiving an RRC reconfiguration message from the network device; and
sending an RRC reconfiguration complete message to the network device; and
the method further comprises: if no temporary capability restriction occurs on the terminal device, sending first RRC signaling to the network device after receiving the RRC reconfiguration message, wherein the first RRC signaling indicates that the terminal device is not in a temporary capability restriction state.

30. The method according to claim 29, wherein the first RRC signaling is user equipment assistance information UAI, and the first RRC signaling does not comprise any field indicating restriction capability information.

31. The method according to claim 29 or 30, wherein the RRC reconfiguration message comprises fifth information, and the fifth information indicates that the terminal device is allowed to send capability restriction information.

32. The method according to claim 31, wherein the method further comprises: sending first capability information to the network device, wherein the first capability information indicates that the terminal device supports capability restriction reporting.

33. The method according to any one of claims 29 to 32, wherein the temporary capability restriction occurs when a plurality of subscriber identity modules of the terminal device work at the same time.

34. The method according to any one of claims 29 to 33, wherein the capability restriction indication information comprises 1 bit; and when a value of the bit is a first value, it indicates that the terminal device is temporarily capability restricted.

35. The method according to claim 31, wherein the capability restriction information comprises at least one of the following: a restricted carrier, a restricted band, a restricted multiple-input multiple-output MIMO layer quantity, or a restricted measurement capability.

36. A communication method, comprising:
receiving a radio resource control RRC establishment request message from a terminal device;
sending an RRC establishment message to the terminal device;
receiving a first message from the terminal device, wherein the first message comprises capability restriction indication information, the capability restriction indication information indicates that the terminal device is temporarily capability restricted, and the first message is an RRC establishment complete message;
sending an RRC reconfiguration message to the terminal device; and
receiving an RRC reconfiguration complete message from the terminal device; and
the method further comprises: receiving first RRC signaling from the terminal device, and determining, based on the first RRC signaling, that the terminal device is not in a capability restriction state.

37. The method according to claim 36, wherein the first RRC signaling is user equipment assistance information UAI, and the first RRC signaling does not comprise any field indicating restriction capability information.

38. The method according to claim 36 or 37, wherein the RRC reconfiguration message comprises fifth information, and the fifth information indicates that the terminal device is allowed to send capability restriction information.

39. The method according to claim 38, wherein the method further comprises: sending first capability information to the network device, wherein the first capability information indicates that the terminal device supports capability restriction reporting.

40. The method according to any one of claims 36 to 39, wherein the temporary capability restriction occurs when a plurality of subscriber identity modules of the terminal device work at the same time.

41. The method according to any one of claims 36 to 40, wherein the capability restriction indication information comprises 1 bit; and when a value of the bit is a first value, it indicates that the terminal device is temporarily capability restricted.

42. The method according to claim 38, wherein
the capability restriction information comprises at least one of the following: a restricted carrier, a restricted band, a restricted multiple-input multiple-output MIMO layer quantity, or a restricted measurement capability.

43. A communication apparatus, comprising:
a processing unit, configured to receive control information via a transceiver unit, wherein the control information indicates that reporting of first information is allowed, and the control information is from a network device, wherein
the processing unit is configured to send the first information via the transceiver unit, wherein the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

44. A communication apparatus, comprising:
a processing unit, configured to: send control information via a transceiver unit, wherein the control information indicates that reporting of first information is allowed; and
receive the first information, wherein the first information indicates a capability of a terminal device in a first band in a first band combination in a capability restriction case, the first band combination belongs to at least one band combination supported by the terminal device, the capability that is in the first band in the first band combination and that is indicated by the first information is lower than a capability that is in the first band in the first band combination and that is indicated by first capability information, the first capability information is capability information reported to a network before the first information is sent, and the first capability information indicates a capability in the at least one band combination supported by the terminal device.

45. A communication apparatus, comprising:
a processing unit, configured to send a first message to a network device via a transceiver unit, wherein the first message comprises capability restriction indication information, the capability restriction indication information indicates that a capability of a terminal device is restricted, and the first message is an unencrypted message, wherein
the processing unit is configured to send a second message to the network device via the transceiver unit, wherein the second message is an encrypted message, and if the terminal device is still capability restricted, the second message comprises first indication information, wherein the first indication information indicates that the terminal device is still capability restricted.

46. A communication apparatus, comprising:
a processing unit, configured to receive a first message from a terminal device via a transceiver unit, wherein the first message comprises capability restriction indication information, the capability restriction indication information indicates that a capability of the terminal device is restricted, and the first message is a message in a radio resource control RRC connection establishment process, wherein
the processing unit is configured to receive a second message from the terminal device via the transceiver unit, wherein
the second message comprises first indication information, wherein the first indication information indicates that the capability is still restricted.

47. A communication apparatus, comprising:
a processing unit, configured to: send a radio resource control RRC establishment request message to a network device via a transceiver unit; receive an RRC establishment message from the network device; and send a first message to the network device, wherein the first message comprises capability restriction indication information, the capability restriction indication information indicates that a terminal device is temporarily capability restricted, and the first message is an RRC establishment complete message, wherein
the processing unit is configured to: receive an RRC reconfiguration message from the network device via the transceiver unit; send an RRC reconfiguration complete message to the network device; and if no temporary capability restriction occurs on the terminal device, send first RRC signaling to the network device after receiving the RRC reconfiguration message, wherein the first RRC signaling indicates that the terminal device is not in a temporary capability restriction state.

48. A communication apparatus, comprising:
a processing unit, configured to: receive a radio resource control RRC establishment request message from a terminal device via a transceiver unit; send an RRC establishment message to the terminal device; and receive a first message from the terminal device, wherein the first message comprises capability restriction indication information, the capability restriction indication information indicates that the terminal device is temporarily capability restricted, and the first message is an RRC establishment complete message, wherein
the processing unit is configured to: send an RRC reconfiguration message to the terminal device via the transceiver unit; receive an RRC reconfiguration complete message from the terminal device; receive first RRC signaling from the terminal device; and determine, based on the first RRC signaling, that the terminal device is not in a capability restriction state.

49. A communication apparatus, comprising a processor and a memory, wherein
the processor is configured to execute a computer program or instructions stored in the memory, to enable the communication apparatus to implement the method according to any one of claims 1 to 42.

50. A computer program product, wherein the computer program product comprises a computer program; and when the computer program runs on a communication apparatus, the communication apparatus is enabled to perform the method according to any one of claims 1 to 42.

51. A computer-readable storage medium, storing a computer program or instructions, wherein when the computer program or the instructions are run on a computer, the computer is enabled to implement the method according to any one of claims 1 to 42.

52. A chip, comprising a processor, wherein the processor is coupled to a memory, and is configured to execute a computer program or instructions stored in the memory, to enable the chip to implement the method according to any one of claims 1 to 42.
